(19) Europäisches Patentamt
European Patent Office
Office européen des brevets

(11) **EP 1 676 156 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(21) Anmeldenummer: **04790365.3**

(22) Anmeldetag: **13.10.2004**

(51) Int Cl.:
*G02B 5/18* (2006.01)  *G03H 1/30* (2006.01)

(86) Internationale Anmeldenummer:
**PCT/EP2004/011496**

(87) Internationale Veröffentlichungsnummer:
**WO 2005/038499 (28.04.2005 Gazette 2005/17)**

(54) **OPTISCH VARIABLE BEUGUNGSSTRUKTUR UND VERFAHREN ZU IHRER HERSTELLUNG**

OPTICALLY VARIABLE DIFFRACTION STRUCTURE, AND METHOD FOR THE PRODUCTION THEREOF

STRUCTURE DIFFRACTANTE OPTIQUEMENT VARIABLE ET SON PROCEDE DE PRODUCTION

(84) Benannte Vertragsstaaten:
**AT BE BG CH CY CZ DE DK EE ES FI FR GB GR HU IE IT LI LU MC NL PL PT RO SE SI SK TR**

(30) Priorität: **15.10.2003 DE 10348623**

(43) Veröffentlichungstag der Anmeldung:
**05.07.2006 Patentblatt 2006/27**

(73) Patentinhaber: **Giesecke & Devrient GmbH**
**81677 München (DE)**

(72) Erfinder:
• **KAULE, Wittich**
**82275 Emmering (DE)**
• **RAUSCHER, Wolfgang**
**81677 München (DE)**
• **STENZEL, Gerhard**
**80686 München (DE)**

(74) Vertreter: **Zeuner, Stefan**
**Zeuner & Summerer**
**Hedwigstrasse 9**
**80636 München (DE)**

(56) Entgegenhaltungen:
**EP-A- 0 604 943   EP-A- 1 096 341**
**WO-A-97/16772   WO-A1-00/73991**
**WO-A1-02/02351   DE-A1- 10 100 836**
**US-A- 5 483 363   US-A- 5 825 547**
**US-A- 5 969 863   US-B1- 6 369 919**
**US-B1- 6 392 768**

• **PAWL STEPIEN ET AL.: "Computer generated optically variable devices containing hidden information" SPIE, Bd. 2659, März 1966 (1966-03), Seiten 218-222, XP002326113**
• **WAYNE R.TOMPKIN ET AL: "machine-Verifiable diffractive Features for Document Security" SPIE, Bd. 3314, April 1998 (1998-04), Seiten 203-213, XP002326114**

**Beschreibung**

Die Erfindung betrifft eine optisch variable Beugungsstruktur, die eine offene und eine versteckte Bildinformation enthält. Die Erfindung betrifft auch ein Sicherheitselement, ein Sicherheitspapier und einen Datenträger mit einer solchen Beugungsstruktur sowie ein Verfahren zu ihrer Herstellung.

Es ist bekannt, Hologramme, holographische Gitterbilder und andere hologrammähnliche Beugungsstrukturen zur Echtheitsabsicherung von Kreditkarten, Wertdokumenten, Produktverpackungen und dergleichen zu verwenden. Um das Hologramm oder die hologrammähnliche Struktur ihrerseits gegen Fälschung zu sichern und die Sicherheit der Datenträger insgesamt weiter zu erhöhen, kann zusätzlich eine versteckte Bildinformation in das Hologramm eingebracht werden. Dabei wird innerhalb des primären, ohne weiteres sichtbaren Hologramms ein weiteres Bild untergebracht, das nicht ohne besondere Maßnahmen erkennbar ist. Derartige versteckte Bildinformationen werden auch als "Hidden Images" bezeichnet.

Während man den Bildinhalt des primären Hologramms mit bloßem Auge erkennt, wird zum Sichtbarmachen des Hidden Image üblicherweise ein Laser, etwa ein handelsüblicher Laserpointer, und ein Auffangschirm benötigt. Zum Auslesen der versteckten Information beleuchtet man eine Stelle im primären Hologramm, an der das Hidden Image versteckt ist, mit dem Laser und fängt die Bildinformation des Hidden Image auf dem Schirm auf. Um die versteckte Information leichter auffinden zu können, wird dasselbe Hidden Image oft an mehreren Orten im primären Hologramm untergebracht.

Eine übliche Methode zur Erzeugung eines Hidden Image besteht darin, dieses als dreidimensionales Hologramm so aufzunehmen, dass die Bildinformation des Hidden Image nur mit kohärentem Laserlicht, jedoch nicht bei Beleuchtung mit üblichen inkohärenten Lichtquellen, wie etwa der ambienten Raumbeleuchtung, zu erkennen ist. Unter normaler Beleuchtung wirkt das Hidden Image dann wie eine graue, weißliche oder pastellfarbene Fläche. Beispielsweise beschreibt die Druckschrift DE 42 37 415 A1 ein Verfahren zum Identifizieren eines legitimen Produkts, bei dem ein holographisches Bild eine normalerweise unsichtbare Bildinformation enthält, die mit einem Lesegerät aus Laser und Bildschirm sichtbar gemacht werden kann.

Eine weitere Methode zur Erzeugung von Hidden Images wird in der Druckschrift DE 101 00 836 A1 beschrieben. Der Hidden Image-Bereich besteht dort aus Unterbereichen, die jeweils ein optisches Gitter bestimmter Gitterkonstante und Winkelorientierung enthalten und bei Laserbeleuchtung einen Bildpunkt des versteckten Informationsmusters rekonstruieren. Um die Fälschungssicherheit zu erhöhen, werden die Unterbereiche so angeordnet, dass sie nicht der Form des Informationsmusters entsprechen. Beleuchtet man alle Unterbereiche gleichzeitig mit einem Laserpointer, so kann man das gesamte Hidden Image auf dem Schirm auffangen. Die Unterbereiche werden dabei im Dot-Matrix-Verfahren, wie in der EP 0 467 601 B1 beschrieben, oder im Holomax-Verfahren, das beispielsweise in der WO 97/16772 beschrieben ist, mit den erforderlichen optischen Gittern belegt.

Neben der DE 10100836 A1 offenbaren auch die US 5 825 547 A und der Artikel Pawel Stepien et al., "Computer generated optionally variable devices containing hidden information", SPIE, Bd. 2659, März 1966, Seiten 218-222, bekannte optisch variable Beugungsstrukturen.

Weitere bekannte Methoden der Erstellung von Hidden Images bedienen sich der Elektronenstrahl-Lithographie. Hierbei wird von dem Hidden Image Motiv zunächst mittels Computer die Fouriertransformierte berechnet. Diese besteht aus einem verschlungenen Linienmuster in mikroskopischen Dimensionen, welches mit Elektronenstrahl-Lithographie einer strahlungsempfindlichen Schicht eingeschrieben wird. Bei Beleuchtung mit einem Laser kann man das zugrunde liegende Hidden Image-Motiv auf einem Schirm sichtbar machen.

Die mit den herkömmlichen Verfahren als echte Hologramme, als Dot-Matrix, als Holomax oder als computererzeugte Fouriertransformierte erstellten Hidden Images weisen nicht die bestmögliche Helligkeit auf. Diese ist jedoch von größter Bedeutung, da ein Hidden Image von sich aus schwer zu erkennen ist und/oder nur einen kleinen Flächenanteil der Beugungsstruktur einnehmen soll. Hinzu kommt, dass die Helligkeit des zur Sichtbarmachung des Hidden Image erforderlichen Laserlichts zur Vermeidung von Augenschäden, die entstehen können, wenn Laserlicht bei der Prüfung des Hidden Image versehentlich in das Auge trifft, auch über die gesetzlich festgelegte Leistung des Lasers eingeschränkt ist. Auch durch die Anbringung des Hidden Image auf einem rauen Substrat, wie Papier, werden die Helligkeit, der Kontrast und die Bildschärfe des Hidden Image-Motivs auf dem Auffangschirm gravierend vermindert.

Darüber hinaus werden Hidden Images in der Regel durch Ausprobieren und die Verwendung von Erfahrungswerten für die konkret gewünschte Kombination aus Informationsmuster und Geometrie des Auffangschirms konstruiert. Die Ergebnisse sind daher nicht optimal und nur schwer auf geänderte Gestaltungen übertragbar.

Davon ausgehend liegt der Erfindung die Aufgabe zugrunde, eine optisch variable Beugungsstruktur der eingangs genannten Art mit helleren Hidden Images sowie ein Verfahren zur Erzeugung solcher Beugungsstrukturen bereitzustellen. Das Verfahren soll auch eine einfache Berechnung der Gitterdaten des Hidden Image für beliebige Informationsmuster und beliebige Schirmgeometrien ermöglichen.

Diese Aufgabe wird durch die optisch variable Beugungsstruktur mit den Merkmalen von Anspruch 1 gelöst. Ein Sicherheitselement, ein Sicherheitspapier und ein Datenträger mit solchen Beugungsstrukturen sowie Verfahren zur Herstellung der Beugungsstrukturen sind in nebengeordneten Ansprüchen angegeben. Weiterbildungen der Erfindung sind Gegenstand der Unteransprüche.

Die Erfindung ermöglicht die einfache Erzeugung optisch variabler Beugungsstrukturen, die eine offene und versteckte Bildinformationen enthalten. Der Begriff "offene Bildinformation" bezeichnet dabei jede Art von Bildinformation, die für einen Betrachter ohne besondere Hilfsmittel erkennbar ist. Insbesondere bezieht sich der Begriff auf unter ambienten Beleuchtungsbedingungen sichtbare Hologramme oder hologrammähnliche Beugungsstrukturen, aber auch auf informationshaltige Druckbilder oder Aussparungen in opaken oder transparenten Schichten. Weitere Möglichkeiten der Gestaltung offener Bildinformation sind weiter unten genauer beschrieben.

Die Bildelemente bzw. die Gitterstrukturelemente, die die offene bzw. die versteckte Information erzeugen, können dabei auf verschiedene Weise miteinander kombiniert sein, um beispielsweise das Vorhandensein der versteckten Bildinformation zu tarnen. Die erfindungsgemäßen Beugungsstrukturen erlauben es, außerordentlich leuchtkräftige Hidden-Images in eine offene Bildinformation, wie etwa ein primäres Hologramm, zu integrieren. Nachfolgend wird der Bereich der die versteckte Bildinformation erzeugenden Gitterstrukturelemente auch oft als Hidden-Image-Bereich bezeichnet.

Nach der Erfindung weist eine gattungsgemäße Beugungsstruktur Gitterstrukturelemente auf, die die versteckte Bildinformation erzeugen, wobei die offene Bildinformation durch die Form und Lage dieser Gitterstrukturelemente gebildet ist.

Dabei ist die offene Bildinformation unter ambienten Beleuchtungsbedingungen der Beugungsstruktur sichtbar, während die versteckte Bildinformation unter ambienten Beleuchtungsbedingungen nicht erkennbar ist und nur bei gerichteter, im Wesentlichen einfarbiger Beleuchtung der Beugungsstruktur mit einem Schirm auffangbar ist. Die versteckte Bildinformation ist aus einer Mehrzahl einzelner Bildpunkte zusammengesetzt, wobei die Gitterstrukturelemente jeweils einem der Bildpunkte zugeordnet sind und ein Gittermuster enthalten, das durch zwei Gitterparameter charakterisiert ist, nämlich eine Gitterkonstante und eine Winkelorientierung so dass gerichtete, im Wesentlichen einfarbige Beleuchtung in eine für den zugeordneten Bildpunkt charakteristische Richtung gebeugt wird.

Die Gitterstrukturelemente sind in Form von Streifen, insbesondere von senkrechten oder waagrechten Streifen, ausgebildet, deren Breite unterhalb der Auflösungsgrenze des bloßen Auges liegt.

Zudem ist die versteckte Bildinformation im Wesentlichen über die Gesamtfläche der Struktur verteilt.

Es können die Gitterstrukturelemente, die die versteckte Bildinformation erzeugen, in unterschiedlichen Flächenanteilen vorgesehen sein. Dadurch können die zugeordneten Bildpunkte der versteckten Bildinformation mit unterschiedlichen Helligkeiten belegt werden, so dass sich beispielsweise Graustufenbilder als versteckte Bildinformation erzeugen lassen. Die unterschiedlichen Flächenanteile können beispielsweise dadurch realisiert werden, dass die Gitterstrukturelemente durch Streifen unterschiedlicher Breite gebildet sind.

Die versteckte Bildinformation stellt beispielsweise eine Umriss- oder Strichzeichnung oder einen Schriftzug dar, da diese gegenüber flächigen Bildmotiven in der Regel weniger Bildpunkte benötigen. Bei einer kleinen Anzahl an Bildpunkten steigt grundsätzlich die Helligkeit pro Bildpunkt. Weniger Bildpunkte erzeugen auch ein gegenüber Störungen unempfindlicheres verstecktes Bild. Zudem erzeugt eine kleine Bildpunktzahl eine kurze Wiederholungsperiode in der offenen Bildinformation und stört diese somit nur wenig. Auf der anderen Seite können die Streifenbreiten und/oder Streifenabschnitte größer gewählt werden, um weniger Übergangszonen zu erzeugen, die unter Umständen die Effektivität reduzieren. Nicht zuletzt ermöglicht eine geringe Bildpunktzahl Gestaltungen, bei denen mehrere Teilbilder in der versteckten Bildinformation integriert sind.

In einer Weiterbildung der erfindungsgemäßen Beugungsstruktur ist vorgesehen, dass die versteckte Bildinformation mehrere Teilbildinformationen enthält, die bei Beleuchtung unterschiedlicher zugeordneter Teilbereiche der Beugungsstruktur erzeugt werden.

Die Teilbildinformationen können beispielsweise eine Bewegungsreihe eines Bildmotivs enthalten, so dass beim aufeinander folgenden Beleuchten der zugehörigen Teilbereiche ein Bewegungsablauf des Motivs erzeugt wird. Enthalten die Teilbildinformationen eine sich vergrößernde oder verkleinernde Umrisslinie eines Bildmotivs, so wird beim aufeinander folgenden Beleuchten der zugehörigen Teilbereiche ein Pumpbild des Motivs erzeugt.

Nach einer weiteren Möglichkeit enthalten die Teilbildinformationen eine Überlagerung von zumindest zwei Bildmotiven, so dass beim aufeinander folgenden Beleuchten der zugehörigen Teilbereiche eine Überblendung zwischen den Bildmotiven erzeugt wird. Die Teilbildinformationen können auch ein Bildmotiv in unterschiedlichen Helligkeitsstufen enthalten, so dass beim aufeinander folgenden Beleuchten der Teilbereiche eine Einblendung, Ausblendung und/oder ein Blinken des Bildmotivs erzeugt wird. Enthält die Teilbildinformation ein Bildmotiv in verschiedenen Ansichten aus unterschiedlichen Betrachtungsrichtungen, so wird beim aufeinander folgenden Beleuchten der Teilbereiche eine attraktive räumlich variierende Ansicht des Bildmotivs erzeugt.

Die Erfindung enthält auch ein Sicherheitselement mit einer optisch variablen Beugungsstruktur der oben beschriebenen Art. Das Sicherheitselement kann insbesondere ein Sicherheitsfaden, ein Etikett oder ein Transferelement sein. Die Erfindung enthält weiter ein Sicherheitspapier mit einer optisch variablen Beugungsstruktur der beschriebenen Art oder einem oben angegebenen Sicherheitselement. Ferner umfasst die Erfindung einen Datenträger, der mit einer optisch variablen Beugungsstruktur der beschriebenen Art versehen ist. Die Beugungsstruktur kann dabei entweder direkt auf dem Datenträger aufgebracht sein oder der Datenträger kann ein Sicherheitselement oder Sicherheitspapier mit einer erfindungsgemäßen Beugungsstruktur umfassen. Bei dem Datenträger kann es sich insbesondere um eine Banknote, ein Wertdokument, einen Pass, eine Ausweiskarte oder eine Urkunde handeln.

Bei einem anderen Verfahren zum Erzeugen einer solchen optisch variablen Beugungsstruktur werden die zweiten Gitterstrukturelemente im Wesentlichen über die Gesamtfläche der Struktur verteilt mit den ersten Gitterstrukturelementen flächig verschachtelt.

Bei einem Verfahren zum Erzeugen einer erfindungsgemäßen optisch variablen Beugungsstruktur können die ersten und zweiten Gitterstrukturelemente mit demselben Herstellungsprozess, vorzugsweise mit Elektronenstrahllithographie, Direct Laser Writing, optischer Lithographie, im Holomax-Verfahren oder Dot-Matrix-Verfahren erzeugt werden.

Grundsätzlich verläuft der Herstellungsprozess einer Prägestruktur von der Belichtung bis zum fertigen Produkt folgendermaßen: Unabhängig davon, ob man in einem ersten Schritt eine holographische Belichtung vornimmt oder ein holographisches Dot-Matrix-Verfahren, eine optische Lithographie wie beispielsweise beim Holomax-Verfahren, oder eine Elektronenstrahllithographie durchführt, wird zunächst eine auf einem Träger aufgebrachte Schicht eines strahlungsempfindlichen Polymers bestrahlt und entwickelt, wobei in einer Oberflächenschicht der Polymerschicht die Beugungsstruktur als Relief entsteht. Von diesem Relief wird eine galvanische Abformung hergestellt, so dass das Relief anschließend in Metall vorliegt und als Prägestempel verwendet werden kann.

Ein solcher Prägestempel wird im Allgemeinen nicht mit nur einem Beugungsstrukturrelief hergestellt, sondern er wird durch geeignetes Zusammensetzen der Reliefs mit einer Vielzahl gleichartiger Beugungsstrukturreliefs hergestellt. Mithilfe eines solchen Prägestempels kann dann eine mit prägbarem Lack beschichtete Folienrolle gleichzeitig mit vielen Beugungsstrukturreliefs versehen werden. Diese Reliefs können für Betrachtung in Aufsicht oder in Durchsicht konfiguriert werden. Für die Betrachtung in Aufsicht werden sie in einem nachfolgenden Bedampfungsschritt mit einer dünnen reflektierenden Metallschicht oder mit einer dielektrischen Schicht versehen. Auf die Metallschicht oder die dielektrische Schicht wird noch eine Schutzschicht aufgebracht. Damit liegt eine Folienrolle mit einer Vielzahl gleichartiger Beugungsstrukturen vor, die ausgeschnitten oder auf andere Weise getrennt und auf ein gewünschtes Objekt aufgeklebt werden können. Für die Betrachtung in Durchsicht werden vorzugsweise keine weiteren Schichten auf die Reliefoberfläche aufgebracht, so dass die Reliefstruktur als Berg- und Talstruktur an der Oberfläche erhalten bleibt.

Anstelle der Folienbeugungsstrukturen können auch Transferbeugungsstrukturen hergestellt werden, indem man in einem speziellen Verfahren die Lackschicht einschließlich des Reliefs, der aufgedampften Schicht und der Schutzschicht von der Folie abzieht und auf das gewünschte Objekt überträgt.

Eine Beugungsstruktur mit transparenten Aussparungen erhält man, wenn die oben genannte dünne Metallschicht entsprechend bearbeitet wird. In einer bevorzugten Ausführungsform druckt man dazu auf die Metallschicht eine Ätzfarbe im Muster der gewünschten Aussparungen. Dadurch wird das Metall an den entsprechenden Stellen ab- oder aufgelöst. Die Rückstände werden wegwischt und erst dann wird eine Schutzschicht aufgebracht. Die weitere Bearbeitung erfolgt dann wie oben beschrieben. Alternativ kann die Metallschicht auch mittels eines Lasers in Form von Mustern oder Zeichen abgetragen werden. Bei einem weiteren Verfahren kann unter der Metallschicht eine lösliche Druckfarbe in Form der späteren Aussparungen aufgedruckt werden. Nach der Metallisierung wird die Farbe gelöst und die darüber liegende Metallschicht im Bereich der Farbe mit abgelöst.

Informationshaltige transparente Aussparungen in der Beugungsstruktur können ebenfalls die offene Bildinformation bilden. Die Aussparungen werden dazu beispielsweise dadurch erzeugt, dass nach der Metallbedampfung eine Ätzfarbe in Form des Designs der offenen Information aufgedruckt wird, die die Metallschicht lokal entfernt, so dass die offene Bildinformation in Durchsicht gut erkennbar ist. Wird ein Hidden Image in dieser Weise behandelt, so kann es durch Reflexion an den verbleibenden Resten der Metallschicht nachgewiesen werden.

Zur Erzeugung der offenen Information kommen natürlich auch weitere Verfahren infrage, wie beispielsweise die Laserpersonalisierung. Hierbei wird nach Fertigstellung eines Dokuments, etwa einer Kreditkarte, welches das Hidden Image enthält, die offene Information, beispielsweise ein Text oder eine Ziffernfolge, mit einem Laser in das Dokument geschrieben. Insbesondere wird durch die Laserbestrahlung eine Metallschicht abgetragen oder eine Farbänderung in dem Dokument erzeugt. Beispielsweise kann die Information durch Einbrennen mit einem starken Laser als schwarze Schrift vor dem metallischen Hintergrund des Hidden Image erscheinen, welches wie oben beschrieben nachgewiesen werden kann. Die genannten Beispiele zeigen, dass praktisch beliebig angebrachte offene Bildinformationen mit den versteckten Bildinformationen kombiniert werden können.

Zur Bestimmung der Gitterparameter der Gitterstrukturelemente wird bevorzugt die Geometrie eines Auffangschirms vorgegeben, auf dem die versteckte Bildinformation bei gerichteter, im Wesentlichen einfarbiger Beleuchtung erscheinen soll, und auf Grundlage der Schirmgeometrie unter Verwendung der Beziehung

$$\vec{n} \times \left( \vec{k}' - \vec{k} \right) = m\vec{g}$$

eine Gitterkonstante und eine Winkelorientierung für die Gitterstrukturelemente berechnet, die die versteckte Bildinformation erzeugen. Dabei stellen $\vec{n}\,\vec{k}'$ und $\vec{k}$ den Normalenvektor auf dem Gitter, den Projektionsvektor und den Beleuchtungsvektor, m die Beugungsordnung und $\vec{g}$ einen Gittervektor dar. Die genaue Bedeutung und Definition der auftretenden Größen wird weiter unter ausführlich erläutert.

Bei einem Verfahren zur Echtheitsprüfung eines Sicherheitselements, eines Sicherheitspapiers oder eines Datenträgers der oben beschriebenen Art werden unter vorgegebenen Beleuchtungsbedingungen Lichtstrahlen von Gitterstrukturelementen einer Beugungsstruktur gebeugt, wobei die Gitterstrukturelemente eine versteckte Bildinformation auf einem Auffangschirm erzeugen. Die Geometrie des Auffangschirms ist dabei so gestaltet, dass die von den Gitterstrukturelementen gebeugten Lichtstrahlen von dem Auffangschirm zu einem Betrachter hin reflektiert werden. Die Echtheit des geprüften Sicherheitselements wird dann auf Grundlage der auf dem Auffangschirm erzeugten versteckten Bildinformation beurteilt. Vorteilhaft kann die Schirmgeometrie durch ein Ellipsoid gebildet werden, wobei der Auftreffpunkt der Lichtstrahlen auf die Gitterstrukturelemente in einem Brennpunkt und das Auge des Betrachters in dem anderen Brennpunkt liegt. Alternativ kann die Schirmgeometrie auch durch eine Fläche mit parabolischem oder kreisförmigem Querschnitt gebildet werden.

Bei einem alternativen Verfahren zur Echtheitsprüfung eines Sicherheitselements, eines Sicherheitspapiers oder eines Datenträgers der oben beschriebenen Art bildet der Auffangschirm die Rückseite einer Feldlinse. Die Feldlinse ist dabei derart gestaltet, dass die von den Gitterstrukturelementen gebeugten Lichtstrahlen die Feldlinse so durchstoßen, dass die versteckte Bildinformation auf dem die Rückseite der Feldlinse bildenden Auffangschirm erzeugt wird.

Weitere Ausführungsbeispiele sowie Vorteile der Erfindung und illustrierende Beispiele werden nachfolgend anhand der Figuren erläutert. Zur besseren Anschaulichkeit wird in den Figuren auf eine maßstabs- und proportionsgetreue Darstellung verzichtet. Soweit im Folgenden keine anders lautenden Ausführungen dazu gemacht werden, sind die anhand der Figuren erläuterten Beispiele sowohl für die Betrachtung in Aufsicht als auch für die Betrachtung in Durchsicht geeignet.

Es zeigen:

Fig.1. eine schematische Darstellung einer Banknote mit einem eingebetteten Sicherheitsfaden nach einem Ausführungsbeispiel der Erfindung,

Fig. 2 den Sicherheitsfaden der Fig. 1 im Querschnitt,

Fig. 3 die grundsätzliche Gestaltung einer erfindungsgemäßen Beugungsstruktur und die geometrischen Verhältnisse bei der Projektion der versteckten Information auf einen Auffangschirm, (a) für Auflicht und Betrachtung in Aufsicht und (b) für Durchlicht und Betrachtung in Durchsicht,

Fig. 4 zur illustration eine optisch variable Beugungsstruktur, wobei (a) die offene Bildinformation und (b) die Beugungsstruktur mit teilweise gefüllten Gitterstrukturelementen für die Erzeugung der versteckten Bildinformation zeigt,

Fig. 5 und 6 zwei Beugungsstrukturen wie in Fig. 4 mit alternativen Anordnungen der Gitterstrukturelemente zur Erzeugung der versteckten Bildinformation,

Fig. 7 eine Beugungsstruktur nach einem weiteren illustrienden Beispiel, bei dem die Bildpunkte der versteckten Bildinformation mit unterschiedlichen Helligkeiten belegt sind,

Fig. 8 eine Beugungsstruktur wie in Fig. 7 mit einer alternativen Anordnung der Gitterstrukturelemente zur Erzeugung der versteckten Bildinformation,

Fig. 9 zur illustration eine Beugungsstruktur, wobei (a) das primäre Hologramm zeigt, (b) das in schmale Streifen aufgeteilte Hologramm und (c) die flächige verschachtelung des primären Hologramms mit dem Hidden Image,

Fig. 10 eine Beugungsstruktur nach einem Ausführungsbeispiel der Erfindung, bei dem die offene Bildinformation durch die Form und Lage der die versteckte Bildinformation erzeugenden Gitterstrukturelemente gebildet wird,

Fig.11 zur illustration eine Beugungsstruktur wie in Fig. 4, bei der der Hidden Image-Bereich in mehrere Abschnitte unterteilt ist, die verschiedene Teilbildinformationen enthalten,

Fig. 12    eine schematische Darstellung der Beugung eines Laserstrahls an einer erfindungsgemäßen Beugungsstruktur (a) bei Betrachtung in Aufsicht und (b) bei Betrachtung in Durchsicht,

Fig. 13    in (a) die in der Beugungsstruktur von Fig. 12 versteckte Bildinformation, wie sie auf dem Auffangschirm erscheint, und in (b) die Positionen der durchnummerierten Bildpunkte der versteckten Bildinformation, und

Fig. 14    in (c) eine Beugungsstruktur nach einem weiteren Ausführungsbeispiel der Erfindung, wobei (a) lediglich die offene Bildinformation und (b) lediglich die teilweise gefüllten Gitterstrukturelemente zur Erzeugung der versteckten Bildinformation zeigt,

Fig. 15    zur illustration eine Beugungsstruktur wie in Fig. 4, bei der der Hidden Image-Bereich in unregelmäßig geformte Teilbereiche unterteilt ist, welche Gitterstrukturelemente zur Erzeugung der versteckten Bildinformation enthalten,

Fig. 16    zwei Beugungsstrukturen mit alternativen Anordnungen der Gitterstrukturelemente zur Erzeugung der versteckten Bildinformation, wobei in (a) ein Hidden Image-Bereich dargestellt ist, der in Teilbereiche unterteilt ist, die in Form von Zeichen und/ oder Mustern ausgebildet sind, und in (b) ein Hidden Image-Bereich dargestellt ist, der in Teilbereiche unterteilt ist, in denen Zeichen und/ oder Muster ausgespart sind,

Fig. 17    in (a) eine Anordnung zur Betrachtung einer versteckten Bildinformation, in der der Auffangschirm derart geformt ist, dass die auftreffenden Lichtstrahlen zum Betrachter hin reflektiert werden, in (b) eine Anordnung zur Betrachtung einer versteckten Bildinformation, in der der Auffangschirm mit einer Feldlinse derart gekoppelt ist, dass die von der versteckten Bildinformation ausgehenden Strahlen ins Auge des Betrachters gelenkt werden.

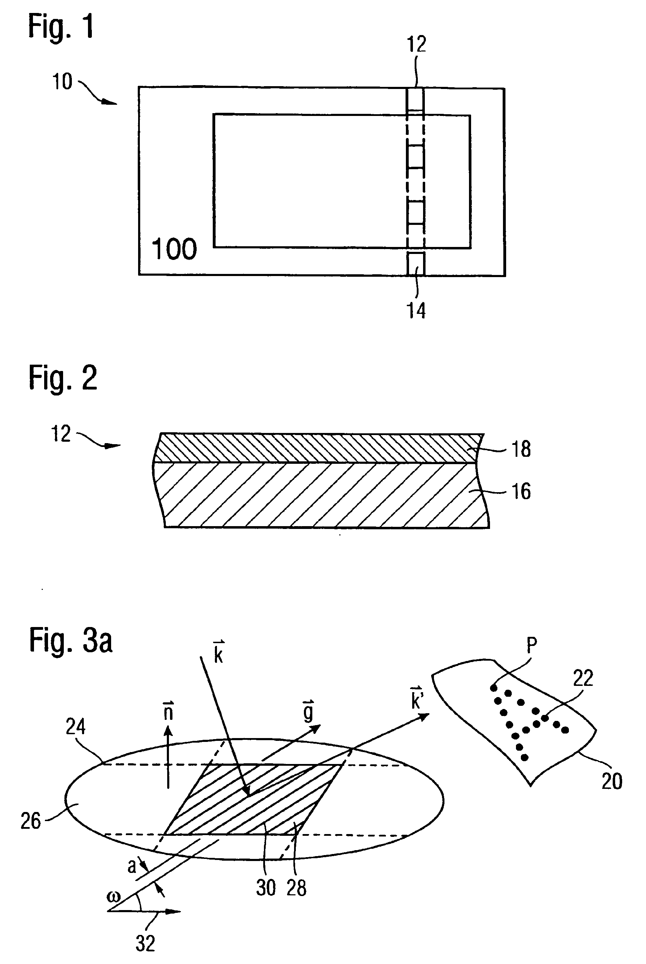

Fig.1 zeigt eine schematische Darstellung einer Banknote 10, die als Beispiel eines erfindungsgemäßen Sicherheitselements einen Sicherheitsfaden 12 aufweist. Der Sicherheitsfaden 12 ist als Fenstersicherheitsfaden ausgebildet, der an bestimmten Fensterbereichen 14 an der Oberfläche der Banknote 10 hervortritt, während er in den dazwischen liegenden Bereichen im Inneren der Banknote 10 eingebettet ist. Je nachdem, ob der Sicherheitsfaden 12 nur an einer Seite der Banknote 10 an die Oberfläche tritt oder ob die Fensterbereiche als durchgehende Löcher im Papier ausgestaltet sind, kann der Sicherheitsfaden mit für Aufsicht oder für Durchsicht geeigneten Beugungsstrukturen versehen sein.

Fig. 2 zeigt den prinzipiellen Schichtaufbau des Sicherheitsfadens 12 im Querschnitt. Der Sicherheitsfaden 12 enthält eine Trägerschicht 16, beispielsweise eine Kunststofffolie, auf der der Schichtaufbau 18 des Sicherheitselements mit der erfindungsgemäßen optisch variablen Beugungsstruktur aufgebracht ist. Es versteht sich, dass der Sicherheitsfaden 12 weitere Schichten und/oder weitere Sicherheitsmerkmale, wie etwa Lumineszenzstoffe oder magnetische Stoffe, aufweisen kann, die jedoch für die vorliegende Erfindung nicht wesentlich sind und daher nicht näher beschrieben werden.

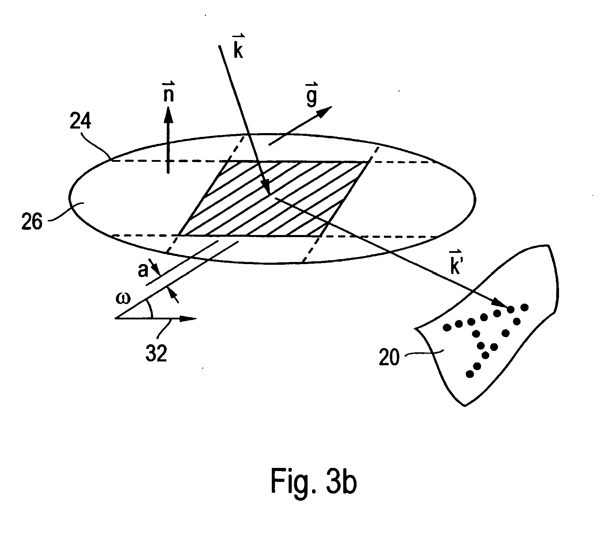

Die grundsätzliche Gestaltung einer erfindungsgemäßen Beugungsstruktur, Schritte bei seiner Erzeugung und die Sichtbarmachung versteckter Bildinformationen wird nun mit Bezug auf Fig. 3 erläutert, die die geometrischen Verhältnisse bei der Projektion der versteckten Information auf einen Auffangschirm darstellt. Fig. 3(a) zeigt dabei die bei Auslegung für Auflicht und Aufsicht vorliegenden Verhältnisse, während Fig. 3(b) die bei Auslegung für Durchlicht und Durchsicht gegebenen Verhältnisse zeigt.

Für jede Beugungsstruktur wird zunächst festgelegt, mit welcher Art von Auffangschirm 20 die versteckte Information aufgefangen werden soll. Bei dem Schirm 20 kann es sich um eine beliebige geformte Fläche, beispielsweise ein Ebenenstück, ein Zylindermantelstück oder auch ein allgemein durch einen funktionellen Zusammenhang F(x,y,z) = 0 beschriebene Fläche handeln. Dann wird die zu erzeugende versteckte Information festgelegt, im vereinfachten Ausführungsbeispiel der Fig. 3 der Buchstabe "A". Die versteckte Information wird dabei aus einer Mehrzahl einzelner Bildpunkte 22 zusammengesetzt, die gemeinsam die gewünschte Information bilden.

Die Beugungsstruktur 24 enthält eine Mehrzahl von Gitterstrukturelementen 26, die zur Erzeugung der versteckten Information mit einem Gittermuster gefüllt sind. Wie weiter unten im Detail erläutert, können diese Gitterstrukturelemente in verschiedener Weise mit anderen Gitterstrukturelementen oder sonstigen Designelementen, die die offene Bildinformation erzeugen, kombiniert sein. Jedes der die versteckte Bildinformation erzeugenden Gitterstrukturelemente 26 ist einem der Bildpunkte 22 zugeordnet, beispielsweise ist das Gitterstrukturelement 28 dem Bildpunkt P zugeordnet.

Das Gittermuster jedes Gitterstrukturelements 28 ist durch zwei Gitterparameter charakterisiert ist, nämlich durch die Gitterkonstante a und den Azimutwinkel ω, der den Winkel angibt, den die Gitterlinien 30 des Gittermusters mit einer Referenzrichtung 32 einschließen. Diese beiden Angaben können auch durch den Gittervektor $\vec{g}$ dargestellt werden, der einen Vektor der Länge 2π/a darstellt, der in Richtung parallel zu den Gitterlinien zeigt. Die Orientierung des Gitterstrukturelements im Raum wird durch den Normalenvektor $\vec{n}$ angegeben, der einen Vektor der Länge 1 darstellt, der senkrecht auf der Gitterebene steht.

Das einfallende monochromatische Licht mit Wellenlänge λ wird durch den Beleuchtungsvektor $\vec{k}$ charakterisiert, der einen Vektor der Länge 2π/λ, darstellt, der von der Lichtquelle zum Gitterstrukturelement 28 zeigt. Der Projektionsvektor $\vec{k}'$ ist ein Vektor der Länge 2π/λ, der vom Gitterstrukturelement 28 zum zugeordneten Punkt P auf dem Auffangschirm 20 zeigt.

Die auftretenden Größen sind nun durch die oben angegebene Beziehung

$$\vec{n} \times \left( \vec{k}' - \vec{k} \right) = m\vec{g} \qquad\qquad (1)$$

miteinander verknüpft, wobei m eine ganze Zahl, insbesondere +1 oder -1 darstellt. Dies erlaubt die direkte Berechnung der Gitterparameter a und ω aus der Angabe der Schirmgeometrie, der Position der Bildpunkte 22 auf dem Schirm 20 und der Beleuchtungsbedingungen, also dem Beleuchtungsvektor $\vec{k}$, der die Wellenlänge des einfallenden Lichts und die Beleuchtungsrichtung enthält. Die Gitterstrukturelemente 26 können so mit Gittermustern gefüllt werden, die bei im Wesentlichen einfarbiger Beleuchtung mit Wellenlänge λ aus Richtung $\vec{k}$ gerade die gewünschte versteckte Bildinformation 22 auf dem Auffangschirm 20 erzeugen.

Zur Durchführung der Berechnung einer erfindungsgemäßen Hidden Image-Beugungsstruktur kann ein Koordinatensystem benutzt werden, bei dem die Beugungsstruktur im Nullpunkt des Koordinatensystems liegt, der Gitternormalenvektor in z-Richtung zeigt und der Gittervektor mit der y-Achse den Winkel ω bildet. Wenn nun ein Laser mit der Wellenlänge λ, der sich in der Position (x, y, z) befindet, einen Punkt an der Position (x', y', z') auf einem Auffangschirm aufleuchten lassen soll, so lassen sich aus der vorstehenden Vektorformel (1) die folgenden Beziehungen für die Gitterparameter herleiten:

$$\tan \omega = -\frac{g_x}{g_y} \qquad\qquad a = \frac{2\pi}{\sqrt{g_x^{\,2} + g_x^{\,2}}} \qquad\qquad (2)$$

wobei $g_x$ und $g_y$ die Komponenten des Gittervektors sind. Diese lassen sich wie folgt berechnen:

$$g_x = -\frac{2\pi}{m\lambda}\left(\frac{y'}{c'} + \frac{y}{c}\right) \qquad g_y = \frac{2\pi}{m\lambda}\left(\frac{x'}{c'} + \frac{x}{c}\right) \qquad g_z = 0$$

wobei c und c' die Abstände der Lichtquelle bzw. des aufleuchtenden Punktes vom Nullpunkt sind. Die Abstände c und c' sind gegeben durch:

$$c = \sqrt{x^2 + y^2 + z^2}\,, \qquad c' = \sqrt{x'^2 + y'^2 + z'^2}\,.$$

Die Schirmgeometrie, d.h. die Gestalt und Lage des Auffangschirms kann nach unterschiedlichen Gesichtspunkten gewählt werden.

Wird das Hidden Image als Sicherheitsmerkmal verwendet, so kann die Sicherheit beispielsweise dadurch erhöht werden, dass die Hidden Image-Beugungsstruktur mithilfe der vorstehenden Beziehungen (1) und (2) für eine bestimmte Schirmgeometrie berechnet wird. Das so berechnete und ausgeführte Hidden Image kann dann nur auf einem Schirm dieser Geometrie in der berechneten Gestalt unverzerrt aufgefangen werden. Wird es auf einem Schirm anderer Gestalt oder Lage aufgefangen, so wird es verzerrt abgebildet.

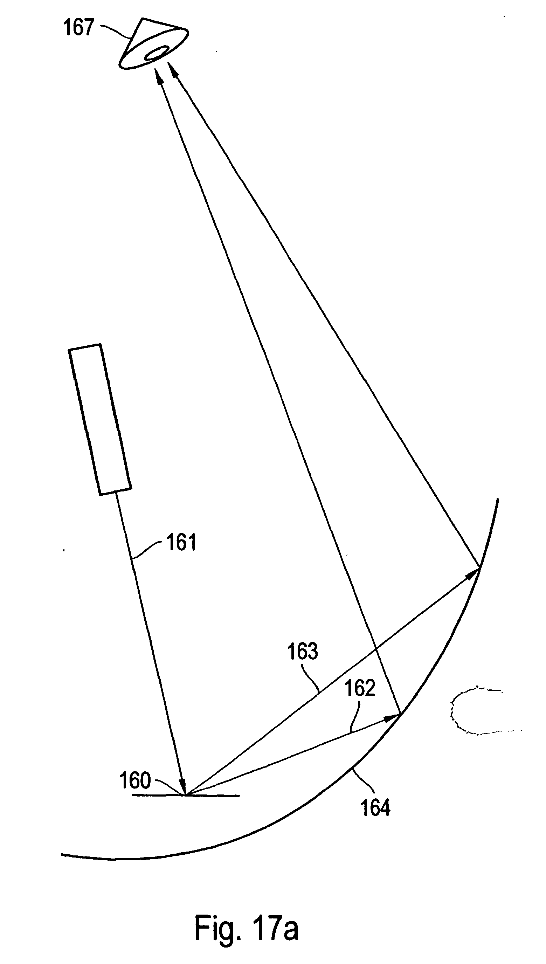

Eine weitere Möglichkeit besteht darin, die Schirmgeometrie so zu wählen, dass die Helligkeit erhöht wird, mit der das Hidden Image auf dem das einfallende Licht streuenden Auffangsschirm aufleuchtet. Bei Betrachtung des Auffangschirms von vorne lässt sich die höchstmögliche Helligkeibet erhalten, wenn der Auffangschirm eine Form hat, welche die auftreffenden Strahlen zum Betrachter hin reflektiert, wie in Fig.17(a) schematisch dargestellt. Der einfallende Lichtstrahl 161 trifft auf das Hidden Image 160, welches Gitterstrukturelemente enthält, die so berechnet sind, dass sie auf dem gekrümmten und Licht streuenden Auffangschirm 164 ein gewünschtes Bild erzeugen. Dabei weist der Auffangschirm eine Geometrie auf, welche die von der Position des Auftreffpunktes des Laserstrahls 161 auf das Hidden Image 160 ausgehenden Strahlen 162,163 zum Betrachter 167 hinlenkt.

Eine bevorzugte Schirmgeometrie wird durch ein Ellipsoid gebildet, wobei das Hidden Image in einem Brennpunkt, das Auge des Betrachters im anderen Brennpunkt liegt. Da der Schirm üblicherweise nahe am Hidden Image und relativ weit vom Betrachter entfernt ist, kann das Ellipsoid näherungsweise durch eine Fläche mit parabolischem oder kreisförmigen Querschnitt ersetzt werden, wobei der Auftreffpunkt des Laserstrahls auf das Hidden Image im Brennpunkt dieser Anordnung liegt und die optische Achse hin - zum Betrachter gerichtet ist.

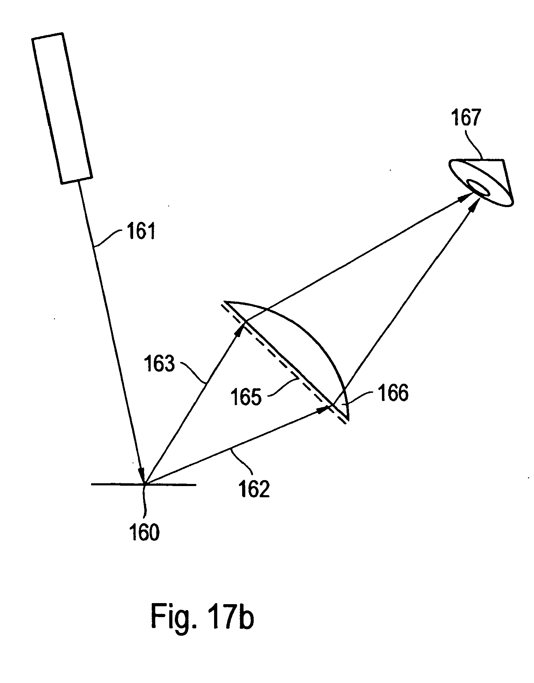

Bei Betrachtung des Auffangschirms von hinten, wie in Fig. 17(b) schematisch dargestellt, wird eine hohe Helligkeit erzielt, wenn der Auffangschirm als Mattscheibe die Rückseite 165 einer Feldlinse 166 bildet. Dabei ist die Feldlinse vorzugsweise so dimensioniert, dass die Position des Auftreffpunktes des Laserstrahls 161 auf dem Hidden Image 160 durch die Feldlinse 166 im Auge des Betrachters 167 abgebildet wird. In diesem Fall werden die Gitterstrukturelemente des Hidden Image so berechnet, dass die von ihnen ausgehenden Strahlen 162,163 die Feldlinse so durchstoßen, dass auf der mattierten Fläche auf der vom Auge abgewandten Seite der Feldlinse das gewünschte Bild erscheint.

Da die Richtung $\vec{k}'$, in die ein einfallender Lichtstrahl $\vec{k}$ gebeugt wird, nur von den Gitterparametern eines Gitterstrukturelements 26 abhängt, nicht aber von dessen Position innerhalb der Beugungsstruktur 24, kann die Anordnung der Gitterstrukturelemente 26 grundsätzlich beliebig gewählt werden. Insbesondere muss die Anordnung der Gitterstrukturelemente 26 nicht der Anordnung der Bildpunkte 22 der versteckten Information entsprechen.

Im Gegenteil wird die Position der die versteckte Information erzeugenden Gitterstrukturelemente 26 vielmehr innerhalb der Beugungsstruktur 24 in der Regel so gewählt, dass ihr Vorhandensein und die dargestellte Information nicht ohne weiteres erkennbar ist. Sie werden daher, wie nachfolgend noch genauer beschrieben, insbesondere in eigens eingebrachten Lücken oder in unbelegten Bereichen einer offen sichtbaren Bildinformation der Beugungsstruktur angeordnet.

In Fig. 3 und den weiteren Figuren sind die Abmessung und Abstände der Gitterlinien 30 zur Illustration stark übertrieben dargestellt. Tatsächlich liegt die Gitterkonstante a der Gittermuster typischerweise im Bereich von etwa 0,5 $\mu$m bis etwa 2 $\mu$m, so dass eine entsprechend große Anzahl an Gitterlinien erforderlich ist, um Beugungsstrukturen mit Abmessung von einigen Millimetern oder einigen Zentimetern zu erzeugen.

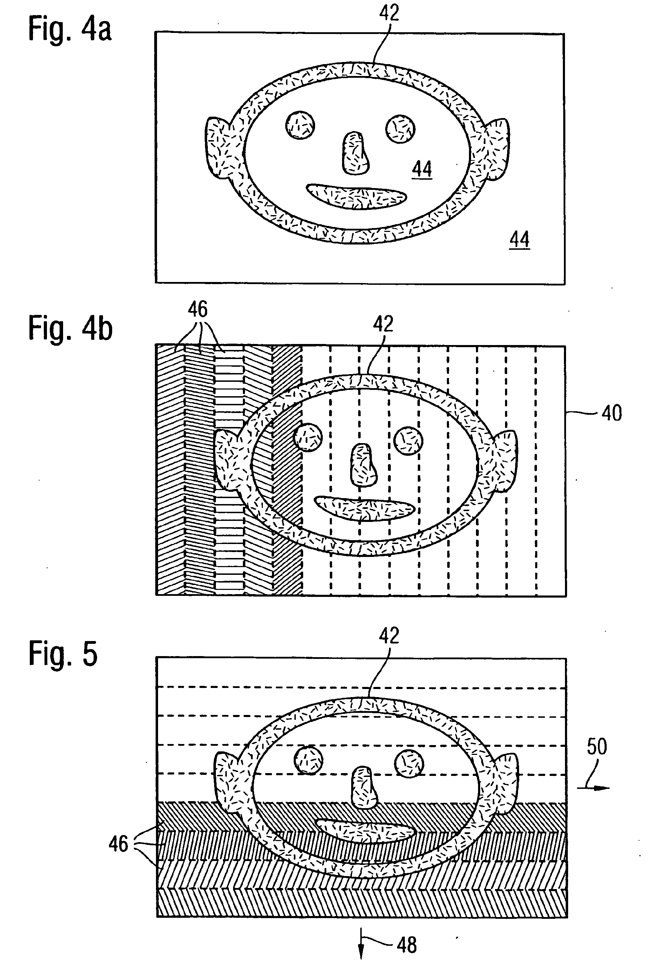

Fig. 4 zeigt ein illustrierendes Beispiel einer optisch variablen Beugungsstruktur 40. Fig. 4(a) zeigt zunächst ein aus ersten Gitterstrukturelementen 42 gebildetes primäres Hologramm, das die offene Bildinformation der Beugungsstruktur 40 darstellt. Das Hologramm wird, wie üblich, bei ambienter Beleuchtung der Beugungsstruktur 40 durch die ersten Gitterstrukturelemente 42 erzeugt, und ist je nach Art des Hologramms für den Betrachter aus einer oder mehreren Betrachtungsrichtungen erkennbar. Anstelle eines Hologramms kann das Bezugszeichen 42 auch ein holographisches Gitterbild oder eine andere hologrammähnliche Beugungsstruktur, ein Druckbild, eine Negativinformation in einer opaken oder reflektierenden Schicht, eine Laserbeschriftung oder dergleichen darstellen, und auch nachträglich auf die Hidden Image-Struktur aufgebracht sein.

Die nicht mit Bildteilen des primären Hologramms belegten Bereiche 44 der Beugungsstruktur 40 sind nun mit zweiten Gitterstrukturelementen 46 belegt, die die versteckte Bildinformation erzeugen. Die Gitterstrukturelemente 46 sind in dem Ausführungsbeispiel der Fig. 4(b) durch eine Vielzahl nebeneinander liegender schmaler Streifen mit einer Breite von etwa 10 $\mu$m gebildet. Ihre Breite liegt damit weit unterhalb der Auflösungsgrenze des bloßen Auges, so dass die Streifenaufteilung bei ambienter Beleuchtung des Beugungsgitters nicht erkannt werden kann.

Die Gitterstrukturelemente 46 sind jeweils mit einem Gittermuster gefüllt, dessen Gitterparameter über die darzustellende versteckte Information bestimmt sind. Der übersichtlicheren Darstellung halber ist in Fig. 4(b) nur ein Teil der Streifen 46 mit dem Gittermuster gefüllt dargestellt. Die genaue Art der versteckten Information ist für die gegenwärtige Schilderung nicht wesentlich. Es kann sich beispielsweise um einfach Umriss- oder Strichzeichnungen, wie etwa Buchstaben- oder Zahlenfolgen handeln, die aus einer Mehrzahl von Bildpunkten zusammengesetzt sind.

Zur Berechnung der Gitterparameter jedes Gitterstrukturelements 46 wird, wie in Zusammenhang mit der Fig. 3 beschrieben, für jeden der Bildpunkte der versteckten Information auf Grundlage der Schirmgeometrie und der Beleuchtungsbedingungen eine Gitterkonstante a und ein Azimutwinkel $\omega$ berechnet, so dass gerichtete, im Wesentlichen einfarbige Strahlung von dem Gittermuster in eine für den zugeordneten Bildpunkt charakteristische Richtung gebeugt wird. Die Reihenfolge der Belegung der Streifen 46 mit den Gittermustern ist grundsätzlich beliebig, vorzugsweise erfolgt sie jedoch unter Berücksichtigung der relativen Lage der Bildpunkte.

Beispielsweise können die zu nebeneinander liegenden Bildpunkten gehörenden Gittermuster in nebeneinander liegenden Streifen 46 untergebracht werden. Dies hat den Vorteil, dass, auch wenn die Beleuchtung nicht alle Streifen erfasst, die zu einem versteckten Bildmotiv gehören, zumindest zusammenhängende Teilbereiche des Bildmotivs auf dem Schirm erzeugt werden.

Alternativ können die zu übernächsten Bildpunkten gehörenden Gittermuster in nebeneinander liegenden Streifen 46 untergebracht werden. In diesem Fall wird bei partieller Beleuchtung beispielsweise der Hälfte der Streifen ein vergröberter Umriss des versteckten Bildmotivs mit jedem zweiten Bildpunkt erzeugt, so dass dessen Charakter erkennbar wird. Dadurch lässt sich leicht eine Übersicht über das versteckte Bildmotiv gewinnen. Zu diesem Zweck kann es bei Bildmotiven, die aus einer größeren Zahl von Bildpunkten aufgebaut sind, auch sinnvoll sein, die zu drittnächsten, viertnächsten oder noch weiter entfernten Bildpunkten gehörenden Gittermuster in nebeneinander liegenden Streifen 46 unterzubringen.

Im Beispiel werden die zweiten Gitterstrukturelemente 46 in dem freien Bereich 44 sukzessiv und zyklisch wiederholt nach einem der genannten Schemata mit den Gittermustern gefüllt. Die Wiederholung wird solange fortgesetzt, bis der gesamte vorgesehene Bereich mit Gitterstrukturelementen 46 gefüllt ist, so dass die versteckte Bildinformation praktisch an jeder Stelle der Beugungsstruktur 40 durch Bestrahlung sichtbar gemacht werden kann. Einem Bildpunkt der versteckten Bildinformation ist dann eine Vielzahl an Gitterstrukturelementen 46 der Beugungsstruktur zugeordnet. Bei einem typischen Durchmesser des Laserspots eines Laserpointers von etwa 500 $\mu$m und der gewählten Streifenbreite von 10 $\mu$m ist zudem sichergestellt, dass versteckte Bildmotive aus bis zu 50 Bildpunkten als Ganzes dargestellt werden.

Eine alternative illustrierende Anordnung der Gitterstrukturelemente 46 ist in Fig. 5 gezeigt, bei der die Aufteilung in schmale Streifen nicht senkrecht, sondern waagrecht erfolgt. Auch hier ist nur ein Teil der Streifen 46 als gefüllt dargestellt. Im Beispiel der Figuren 4 und 5 kann die offene Bildinformation des primären Hologramms für eine bestimmte Betrachtungsrichtung 48 ausgelegt sein. Legt man für die versteckte Bildinformation die gleiche Betrachtungsrichtung fest, wie etwa in Fig. 4, so erscheinen die damit belegten Flächen 46 bei ambienter Beleuchtung weißlich oder pastellfarben, was als Gestaltungsmerkmal in dem Design der offenen Bildinformation verwendet werden kann.

Ist dieser Effekt nicht gewünscht, so kann die Betrachtungsrichtung 50 der versteckten Bildinformation senkrecht zur Betrachtungsrichtung 48 des primären Hologramms gewählt werden, wie in Fig. 5 gezeigt. In diesem Fall erscheinen die Hidden Image-Bereiche im primären Hologramm bei ambienter Beleuchtung ähnlich wie unbelegte Flächen.

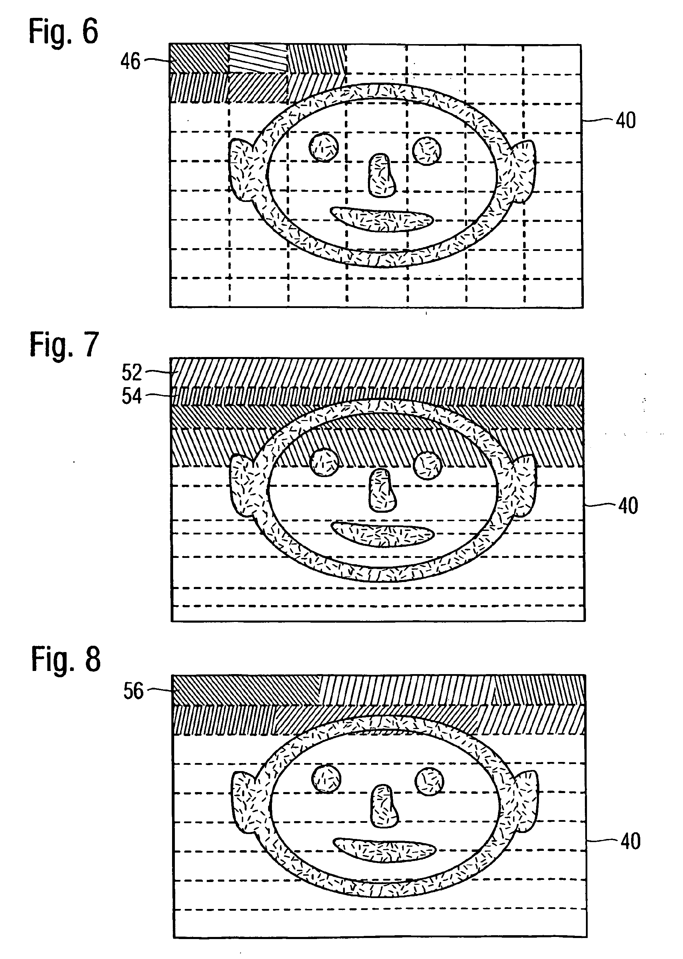

Ein weiteres illustrierendes Beispiel ist in Fig. 6 dargestellt. Bei dieser Variante sind die Gitterstrukturelemente 46 durch rechteckige Teilbereiche gebildet, die jeweils mit einem einheitlichen Gittermuster eines zugeordneten Bildpunktes gefüllt sind. In der Figur sind nur einige der Teilbereiche 46 gefüllt dargestellt. Bei dieser Ausgestaltung lassen sich eine noch größere Zahl an Gitterstrukturelementen 46 gleichzeitig mit dem Strahl eines Laserpointers erfassen. Beträgt beispielsweise die Höhe der rechteckigen Teilbereiche beispielsweise 10 $\mu$m und ihre Länge 50 $\mu$m, so werden bei einem angenommenen Strahldurchmesser von rund 0,5 mm etwa 400 Gitterstrukturelemente gleichzeitig beleuchtet.

Selbst wenn das versteckte Bildmotiv nicht aus so vielen Bildpunkten besteht, wird durch die Aufteilung in kleine Teilbereiche eine Verkleinerung der Strukturen im Hidden Image-Bereich erreicht. Beispielsweise kann auch bei der Darstellung von vergleichsweise wenigen Bildpunkten mit nebeneinander liegenden Streifen eine Periodenlänge erreicht werden, die mit bloßem Auge erkennbar ist und so den Bildeindruck der offenen Information stört. Durch Unterteilung der Streifen in kleinere rechteckige Abschnitte können die den Bildpunkten zugeordneten Gitterstrukturelemente 46 dagegen in einem Flächenbereich unterhalb der Auflösungsgrenze des Auges angeordnet werden.

Anstelle der regelmäßigen Aufteilung der Fig. 6 kommt auch eine Abschnittseinteilung in Frage, bei der die rechteckigen Teilbereiche in übereinander liegenden Streifen gegeneinander verschoben sind. Auch kann die Aufteilung in benachbarten Streifen völlig unregelmäßig sein. Statt der rechteckigen Abschnitte können auch beliebig geformte Teilbereiche, wie etwa Dreiecke, Sechsecke oder dergleichen, eingesetzt werden. Eine regelmäßige Form der Teilbereiche erleichtert es dabei, eine vollständige Bedeckung des Hidden Image-Bereichs zu erzielen.

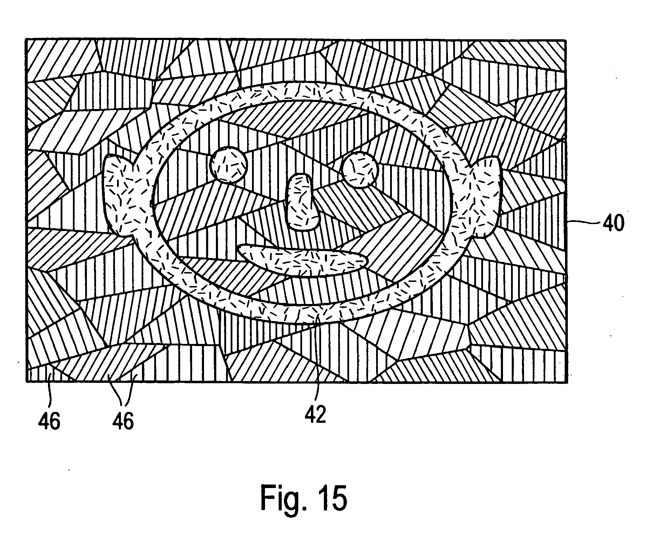

Eine unregelmäßige Form der Teilbereiche wiederum hat den Vorteil, dass sich störende, mit bloßem Auge sichtbare Muster in den Hidden Image-Bereichen einfacher vermeiden lassen. Eine solche alternative Anordnung der zweiten Gitterstrukturelemente 46 ist in Fig. 15 gezeigt. Bei dieser illustrierenden Variante weisen die Teilbereiche der zweiten Gitterstrukturelemente 46 unregelmäßig geformte Umrisse auf. Wie bei der in Fig. 6 gezeigten regelmäßigen Aufteilung sind die Teilbereiche jeweils mit einem einheitlichen Gittermuster eines zugeordneten Bildpunktes gefüllt.

Ein weiteres illustrierendes Beispiel zeigt Fig.7. Bei dieser Gestaltung sind die Bildpunkte der versteckten Bildinformation mit unterschiedlichen Helligkeiten belegt, wodurch attraktive Gestaltungsmöglichkeiten, wie beispielsweise Graustufenbilder, möglich sind. Dazu wird der Flächenanteil jedes Gitterstrukturelements 46 je nach der gewünschten Helligkeit des zugeordneten Bildpunkts kleiner oder größer ausgeführt. Soll beispielsweise ein erster Bildpunkt $P_1$ der versteckten Information mit der doppelten Intensität leuchten wie ein zweiter Punkt $P_2$, so werden die mit dem Punkt $P_1$ zugeordneten Streifen 52 mit doppelter Breite wie die dem Punkt $P_2$ zugeordneten Streifen 54 ausgebildet. Analog wird für andere Helligkeitswerte vorgegangen.

Anstelle einer Änderung der Größe der Streifen kann auch jeweils eine unterschiedliche Anzahl gleich großer Bereiche vorgesehen sein. Beispielsweise lassen sich die Hidden Image-Bereiche in Flächenanteile aufteilen, die jeweils etwa 0,0001 mm$^2$ groß sind. Soll beispielsweise ein erster Bildpunkt P$_1$ mit der doppelten Intensität leuchten wie ein zweiter Bildpunkt P$_2$, so werden mit den zu P$_1$ gehörigen Gitterdaten doppelt so viele Teilbereiche zu je 0,0001 mm$^2$ belegt wie mit den zu P$_2$ gehörigen Gitterdaten.

Zerlegt man Streifen in Abschnitte, so kann, wie in Fig. 8 gezeigt, die Streifenbreite konstant gelassen werden und nur die Länge der Abschnitte 56 je nach gewünschter Helligkeit variiert werden. Selbstverständlich können die beiden Maßnahmen auch zusammen eingesetzt werden, also sowohl Streifenbreite als auch Abschnittslänge verändert werden.

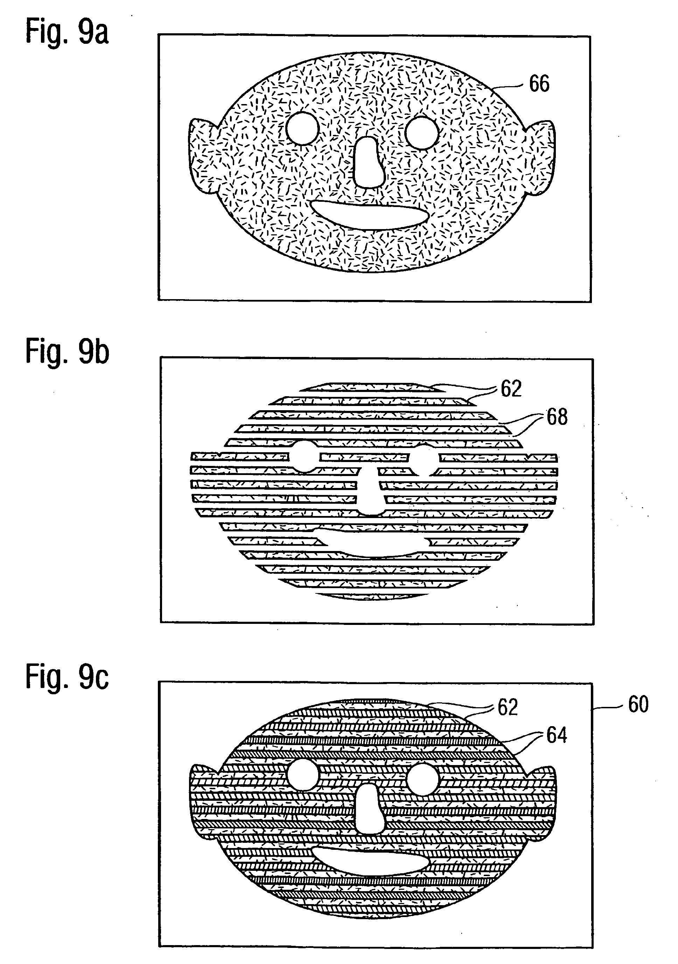

Eine weitere Möglichkeit, die offene und die versteckte Information miteinander zu kombinieren, wird nunmehr in Zusammenhang mit der Beugungsstruktur 60 der Fig. 9 erläutert. Bei diesem illustrierenden Beispiel sind die ersten Gitterstrukturelemente 62, die die offene Bildinformation erzeugen, und die zweiten Gitterstrukturelemente 64, die die versteckte Bildinformation erzeugen, flächig miteinander verschachtelt. Dazu wird das in Fig. 9(a) gezeigte primäre Hologramm 66 zunächst in schmale Streifen aufgeteilt, Fig. 9(b). Da unmittelbar benachbarte Streifen nur wenig unterschiedliche Bildinformation enthalten, kann beispielsweise jeder zweite Streifen weggelassen werden, und in die freigewordenen Lücken 68 des Hologramms 66 können Streifen 64 des Hidden Images eingefügt werden, wie in Fig. 9(c) dargestellt.

Jeder Streifen 64 ist dabei, wie oben beschrieben, einem Bildpunkt der versteckten Bildinformation zugeordnet und mit einem entsprechend der Lage des Bildpunktes berechneten Gittermuster belegt. Das Einfügen der Streifen 64 in die Lücken 68 wiederholt sich zyklisch, bis alle Lücken 68 des Hologramms aufgefüllt sind.

Bei dieser illustrierenden Variante kann die versteckte Bildinformation unabhängig vom Bildgehalt der offenen Information in die Beugungsstruktur eingefügt werden, da sie nicht in unbelegten Flächenbereichen abgelegt werden muss. Dafür führt das Weglassen von ersten Gitterstrukturelementen aus dem primären Hologramm zu einer entsprechend dem weggelassenen Anteil geringerer Helligkeit.

Bei der Herstellung der verschachtelten Beugungsstruktur können die ersten Gitterstrukturelemente 62 des primären Hologramms und die zweiten Gitterstrukturelemente 64 des Hidden Image im gleichen Verfahren, vorzugsweise mittels Elektronenstrahllithographie geschrieben werden. Dabei werden insbesondere die in Druckschriften DE 102 26115 und DE 102 43 413 beschriebenen Verfahren eingesetzt und alle Bildteile in einem Zug geschrieben.

Alternativ werden die ersten Gitterstrukturelemente 62 und die zweiten Gitterstrukturelemente 64 in unterschiedlichen Verfahren belichtet. Dazu kann man beispielsweise wie in der Druckschrift DE 103 08 328 in den dortigen Fig.1-3, 8, 9 und 11 dargestellt vorgehen, und die zweiten Gitterstrukturelemente 64 in die Lücken des primären Hologramms 66 einfügen.

Anstelle der Streifenzerlegung der Fig. 9 können auch beliebig geformte kleine Lücken in dem primären Hologramm 66 erzeugt werden, um die Gitterstrukturelemente flächig zu verschachteln. In diese Lücken werden dann die zweiten Gitterstrukturelemente mit den jeweiligen Gittermustern eingebracht.

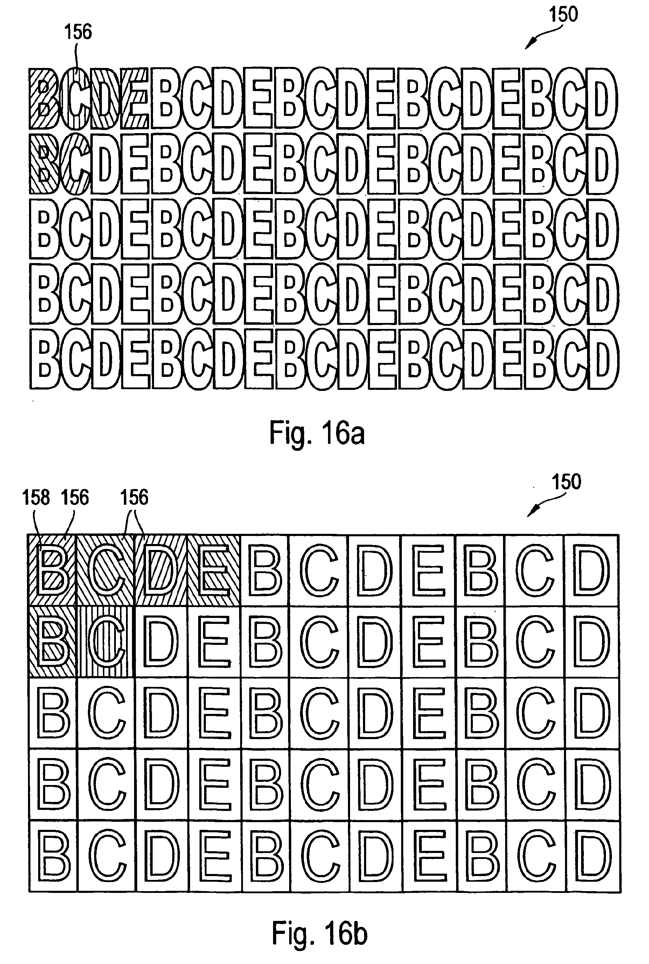

Eine weitere Möglichkeit besteht darin, das Hidden Image und das primäre Hologramm so zu überlagern, dass das primäre Hologramm unter dem Hidden Image sichtbar bleibt. Dazu kann so vorgegangen werden, wie in der Druckschrift DE 103 08 328 in den dortigen Fig. 17a-c und 18a-d dargestellt. Das Hidden Image und das primäre Hologramm können auch so überlagert werden, dass entweder das primäre Hologramm oder das Hidden Image bereichsweise zugeschüttet wird, wobei die Bereiche so gewählt werden, dass ihr Fehlen im primären Hologramm nicht störend auffällt. Dazu kann beispielsweise wie in der Druckschrift DE 103 08 328 in den dortigen Fig. 16a-d beschrieben vorgegangen werden.

Im Zusammenhang mit der Fig. 5 wurde beschrieben, dass die Betrachtungsrichtung der versteckten Bildinformation senkrecht oder parallel zur Betrachtungsrichtung des primären Hologramms gelegt werden kann. Werden der Hidden Image-Bereich und das primäre Hologramm überlagert oder verschachtelt, so empfiehlt es sich, die Hidden Image-Betrachtungsrichtung senkrecht zur Betrachtungsrichtung des primären Hologramms anzuordnen, da bei paralleler Anordnung ein störender weißlicher Schleier über dem primären Hologramm erzeugt wird.

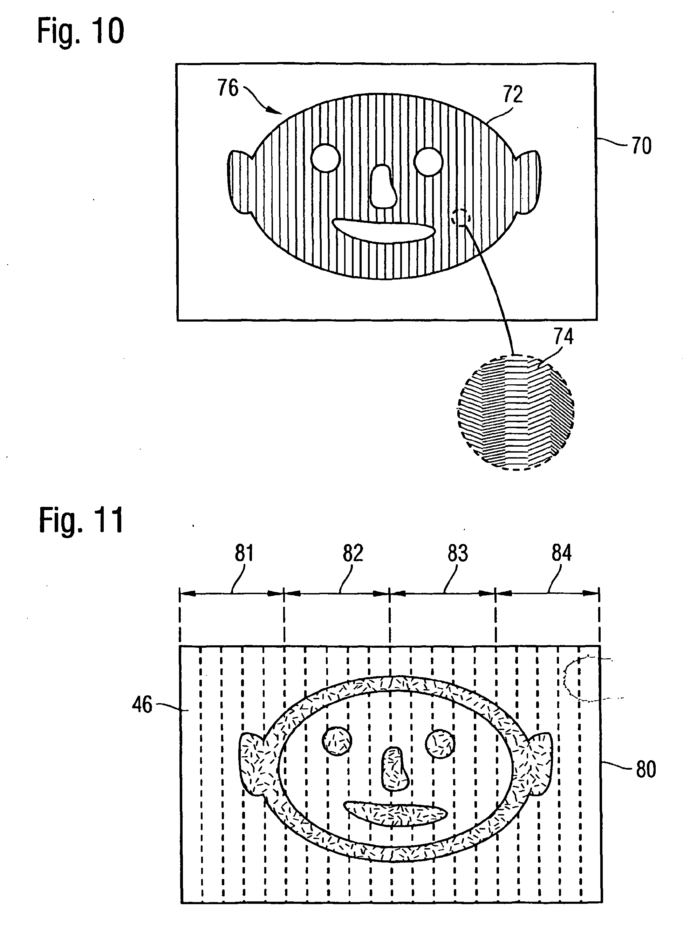

Fig. 10 zeigt eine Beugungsstruktur 70 nach einem Ausführungsbeispiel der Erfindung. Die Beugungsstruktur 70 enthält kein primäres Hologramm als offene Bildinformation. Vielmehr ist der Hidden Image-Bereich 72, also der Bereich, der die versteckte Bildinformation erzeugenden Gitterstrukturelemente 74 enthält, so gestaltet, dass er selbst mit seiner Form und Lage die offene Bildinformation, im Ausführungsbeispiel ein Gesicht 76, bildet. Bei ambienter Beleuchtung der Beugungsstruktur 70 ist nur das Gesicht 76 zu erkennen, bei Bestrahlung mit einem Laserpointer erscheint die versteckte Bildinformation auf einem Auffangschirm.

Bei der Wahl der Bildmotive für die versteckte Information sind Umrisszeichnungen oder Strichzeichnungen gegenüber den ebenfalls möglichen flächigen Bildmotiven in der Regel bevorzugt, da sie weniger Bildpunkte zu ihrer Darstellung benötigen. Je weniger Bildpunkte verwendet werden, desto größer ist grundsätzlich die Helligkeit pro Bildpunkt. Weniger Bildpunkte erzeugen auch ein weniger detailliertes Bild, das unempfindlicher gegen Trübung durch Abnutzung oder Knittern ist. Dies stellt bei der Motivwahl für Hidden Images einen wichtigen Gesichtspunkt dar, da sie auf solche Einflüsse sehr empfindlich reagieren. Weniger Bildpunkte im Hidden Image Bereich erzeugen im primären Hologramm zudem eine kleinere Wiederholungsperiode und stören damit weniger. Auch kann man bei wenigen Bildpunkten die Streifenbreiten und/oder Streifenabschnitte größer machen und erhält damit weniger Übergangszonen, die unter Umständen die Effektivität reduzieren.

Neben statischen Bildinformationen, die an mehreren oder vielen Stellen der Beugungsstruktur in gleicher Form abgelegt werden, kann die versteckte Bildinformation auch mehrere Teilbildinformationen enthalten, die bei Beleuchtung unterschiedlicher zugeordneter Teilbereiche der Beugungsstruktur erzeugt werden. Beispielsweise zeigt Fig. 11 eine Beugungsstruktur 80, die ähnlich wie die Beugungsstruktur 40 der Fig. 4(b) ausgebildet ist. Allerdings ist der von den ersten Gitterstrukturelementen 42 unbelegte Bereich 44 im illustrierenden Beispiel der Fig.11 in vier Abschnitte 81-84 unterteilt, die jeweils eine unterschiedliche versteckte Teilbildinformation enthalten. Jeder Abschnitt 81-84 ist, wie oben beschrieben, in eine Vielzahl schmaler Streifen unterteilt, die die zweiten Gitterstrukturelemente 46 bilden.

Beispielsweise enthalten die Abschnitte 81-84 eine Bewegungsreihe eines Bildmotivs, so dass beim aufeinander folgenden Beleuchten der zugehörigen Abschnitte ein Bewegungsablauf des Motivs erzeugt wird. Um keine unschönen Überlagerungen entstehen zu lassen, bei denen man zwei oder mehrere Bewegungszustände gleichzeitig sieht, wird die Breite der Abschnitte 81-84 etwa so groß wie der typische Laserpointer-Leuchtpunkt gemacht.

Fig.11 zeigt nebeneinander angeordnete Abschnitte 81-84. Die Abschnitte können jedoch auch senkrecht übereinander oder in beliebiger Richtung angeordnet sein, der Laserpointer muss dann beim Auslesen entsprechend bewegt werden. Eine Anordnung nebeneinander liegender Bilder kommt der natürlichen Bewegung der Hand, die den Laserpointer führt, dabei allerdings am meisten entgegen. Soll bei geradliniger Bewegung des Laserpointers in jeder Richtung eine Motivabfolge sichtbar sein, so empfiehlt es sich, die Gitterstrukturelemente 46 nicht in Form gerader Streifen, sondern in gebogener oder geschwungener Gestalt, beispielsweise in Wellenform, auszubilden.

Neben Bewegungsreihen können die verschiedenen Abschnitte auch andere Bilderfolgen enthalten, beispielsweise ein Pumpbild, einen Übergang zwischen zwei oder mehreren verschiedenen Bildmotiven, ein einblendendes, ausblendendes oder blinkendes Bildmotiv oder auch verschiedene räumliche Ansichten eines Bildmotiv aus unterschiedlichen Richtungen, so dass beim Abfahren der zugehörigen Abschnitte beispielsweise ein sich auf dem Auffangschirm drehender Würfel erscheint.

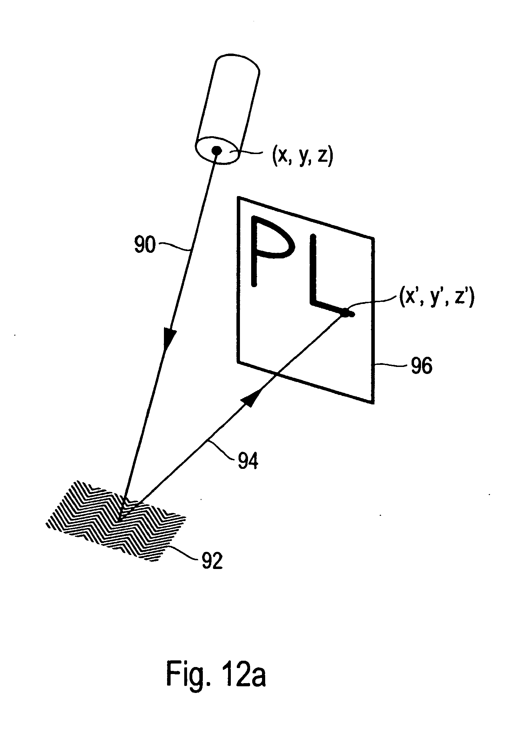

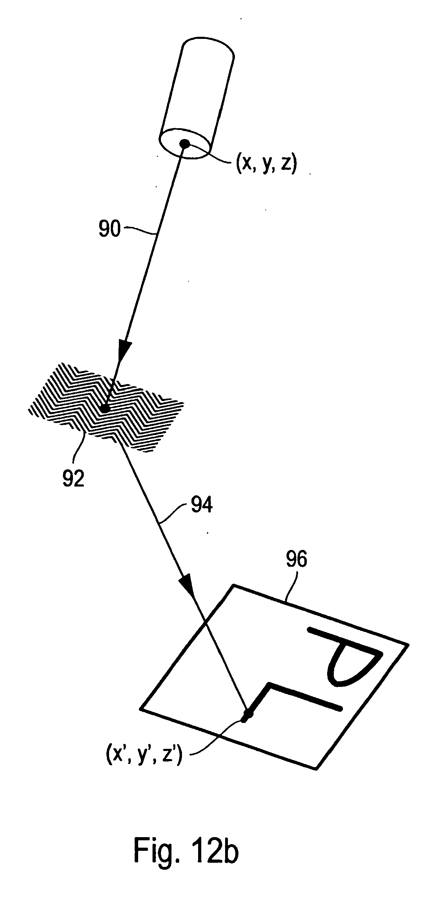

Fig. 12 zeigt eine schematische Darstellung der Beugung eines Laserstrahls an einer erfindungsgemäßen Beugungsstruktur bei Betrachtung in Aufsicht bzw. in Reflexion (Fig. 12(a)) und bei Betrachtung in Durchsicht (Fig.12 (b)). Ausgehend vom Punkt (x,y,z) trifft dabei ein Laserstrahl 90 auf ein Gitter 92, das sich im Nullpunkt des Koordinatensystems befindet. Der Laserstrahl 90 wird dort gebeugt (Bezugszeichen 94) und trifft im Punkt (x', y', z') auf einen Auffangschirm 96.

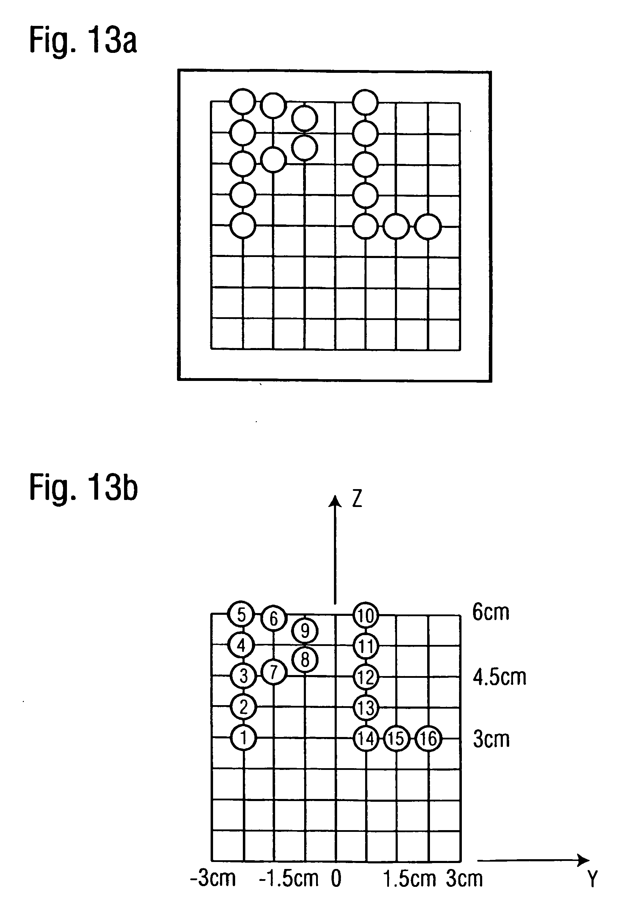

Tabelle 1 zeigt ein Rechenbeispiel für eine erfindungsgemäße Hidden Image-Beugungsstruktur, wie sie in Fig. 12(a) schematisch dargestellt ist, die nun mit Bezug auf Figuren 12(a) und 13 weiter erläutert wird. Aus den Angaben im Vorspann der Tabelle 1 und aus den Positionen der Punkte 1 bis 16, die die Buchstabenfolge PL repräsentieren, lassen sich mithilfe der Beziehungen (1) bzw. (2) die zu den Punkten 1 bis 16 gehörenden Azimutwinkel und Gitterkonstanten berechnen. Die Ergebnisse sind in Tabelle 1 zusammengestellt.

**Tabelle** 1:

| Beugungsordnung m =1<br>Wellenlänge des Lasers: 635 nm<br>Position des Lasers: x = -1.2 cm, y = -1.4 cm, z =11.5 cm<br>Position der Mattscheibe: x' = -5 cm, senkrecht zur x-Achse<br>Position des Gitters: in der xy-Ebene im Nullpunkt | | | | | |
|---|---|---|---|---|---|
| **Punkt-Nr** | **x'(cm)** | **y'(cm)** | **z'(cm)** | **$\omega(°)$** | **a (nm)** |
| 1 | -5 | -2,25 | 3 | 28,0026 | 620,8619 |
| 2 | -5 | -2,25 | 3,75 | 28,2041 | 653,9430 |
| 3 | -5 | -2,25 | 4,5 | 28,4308 | 691,1591 |
| 4 | -5 | -2,25 | 5,25 | 28,6760 | 731,4135 |
| 5 | -5 | -2,25 | 6 | 28,9343 | 773,7920 |
| 6 | -5 | -1,5 | 5,9 | 22,8330 | 793,3048 |
| 7 | -5 | -1,5 | 4,6 | 22,2286 | 715,3931 |
| 8 | -5 | -0,8 | 4,875 | 16,0325 | 749,4073 |
| 9 | -5 | -0,8 | 5,625 | 16,4790 | 797,3516 |

(fortgesetzt)

| Punkt-Nr | x'(cm) | y'(cm) | z'(cm) | ω(˚) | a (nm) |
|---|---|---|---|---|---|
| 10 | -5 | 0,75 | 6 | 1,9045 | 857,3042 |
| 11 | -5 | 0,75 | 5,25 | 1,2564 | 804,5961 |
| 12 | -5 | 0,75 | 4,5 | 0,6396 | 754,3350 |
| 13 | -5 | 0,75 | 3,75 | 0,0676 | 707,6518 |
| 14 | -5 | 0,75 | 3 | -0,4428 | 665,9348 |
| 15 | -5 | 1,5 | 3 | -7,8639 | 673,8483 |
| 16 | -5 | 2,25 | 3 | -14,8714 | 679,6329 |

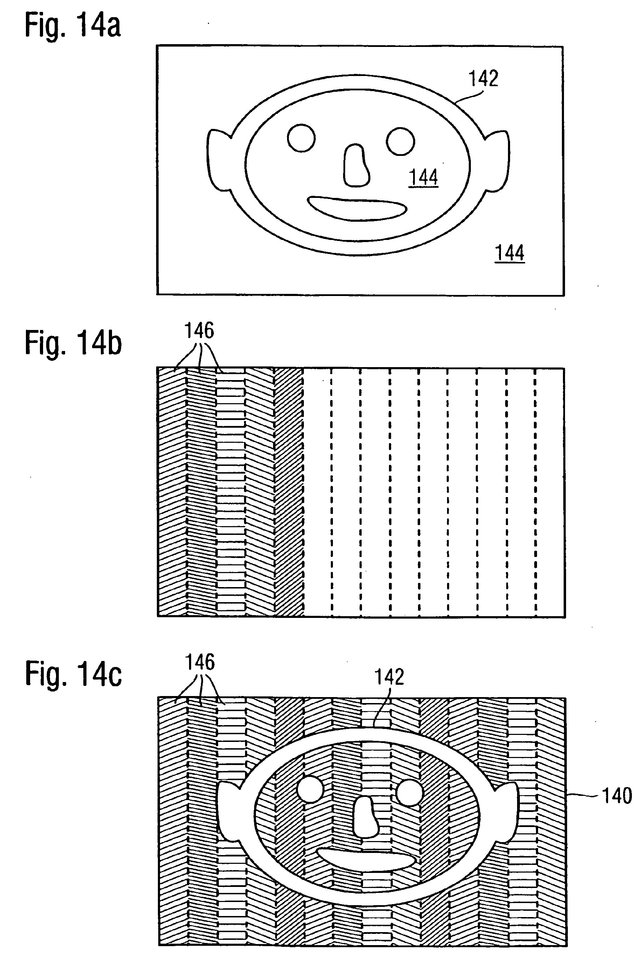

Ein Weiteres Ausführungsbeispiel der Erfindung wird nunmehr in Zusammenhang mit Fig. 14 erläutert.

Dabei ist das Hidden Image ein aus Gitterstrukturelementen 146 gebildetes Gitterbild, wie Fig.14(b) dargestellt, in das die in Fig. 14(a) gezeigte offene Bildinformation 142 in Form von Aussparungen in der Metallschicht des für die Betrachtung in Aufsicht ausgelegten Hidden Image eingebracht ist. Damit ergibt sich die in Fig. 14(c) gezeigte Beugungsstruktur 140, in der der Bereich 142 in einer glitzernden metallischen Schicht transparent ausgespart ist. Das Hidden Image in dieser metallischen Schicht kann wie oben beschrieben nachgewiesen werden. Analog zu Fig. 14(c) können auch die Beispiele der Figuren 5 bis 8 als Hidden Image mit Aussparungen ausgebildet sein.

Bei einer anderen, illustrienden Gestaltung stellt Fig. 14(b) ein auf einem Objekt aufgebrachtes Hidden Image-Gitterbild dar und Fig. 14(a) zeigt ein Druckbild, mit welchem dieses Hidden Image-Gitterbild überdruckt ist. Insgesamt entsteht so wieder eine Beugungsstruktur 140 wie in Fig. 14(c), wobei in diesem Fall das Bezugszeichen 142 die gedruckte offene Bildinformation und das Bezugszeichen 146 die Gitterstrukturelemente der versteckten Bildinformation darstellt. Analog zu Fig. 14(c) können auch die Beispiele der Figuren 5 bis 8 als Hidden Image mit Überdruckungen ausgebildet sein.

In noch einer weiteren illustrierenden Gestaltung stellt Fig. 14(b) ein auf einem Objekt aufgebrachtes Hidden Image-Gitterbild dar und Fig. 14(a) zeigt eine Laserbeschriftung, mit welcher das Hidden Image-Gitterbild teilweise überschrieben ist. Insgesamt entsteht so eine Beugungsstruktur 140, die eine gelaserte offene Bildinformation 142 und eine versteckte Bildinformation erzeugende Gitterstrukturelemente 146 aufweist. Analog zu Fig. 14(c) können auch die Beispiele der Figuren 5 bis 8 als Hidden Image mit Laserbeschriftung ausgeführt sein.

Auf einer Serie von Objekten kann die offene Bildinformation gleich sein oder individuell ausgeführt werden. Beispiele für individuelle Bildinformation sind Drucken mit einem Nummerierwerk oder Laserbeschriftung mit individueller Ansteuerung.

Gemäß einer weiteren Ausführungsform ist das Hidden Image ein aus zweiten Gitterstrukturelementen 156 gebildetes Gitterbild, bei welchem die Teilbereiche der Gitterstrukturelemente die Form beliebiger Zeichen und/oder Muster aufweisen und auf diese Weise selbst eine (gegebenenfalls mit der Lupe erkennbare) offene Bildinformation darstellen, wie in Fig. 16(a) und (b) gezeigt. Insgesamt entsteht so eine Beugungsstruktur 150, die eine versteckte Bildinformation erzeugende Gitterstrukturelemente 156 und eine durch die Gestaltung dieser Gitterstrukturelemente erzeugte offene Bildinformation aufweist.

Bei der in Fig.16(a) gezeigten Gestaltung sind die zweiten Gitterstrukturelemente 156 selbst in Form von Zeichen und/oder Mustern, beispielsweise als Schriftzeichen, ausgeführt und jeweils mit einem einheitlichen Gittermuster eines zugeordneten Bildpunktes gefüllt. Alternativ können die Zeichen und/oder Muster auch in Form von Aussparungen 158, beispielsweise als Negativschrift, in den zweiten Gitterstrukturelementen 156 vorliegen, wie dies in Fig.16(b) dargestellt ist. Die Gitterstrukturelemente 156 sind dabei als rechteckige Teilbereiche ausgebildet. Der übersichtlicheren Darstellung halber ist in den Fig. 16 (a) und (b) nur ein Teil der durch die Schriftzeichen bzw. durch die rechteckigen Teilbereiche gebildeten Gitterstrukturelemente 156 mit dem Gittermuster gefüllt dargestellt.

**Patentansprüche**

1. Optisch variable Beugungsstruktur (70), die eine offene und eine versteckte Bildinformation enthält, wobei die offene Bildinformation bei ambienten Beleuchtungsbedingungen für einen Betrachter sichtbar ist, während die versteckte Bildinformation unter ambienten Beleuchtungsbedingungen für einen Betrachter nicht erkennbar ist und nur bei gerichteter, im Wesentlichen einfarbiger Beleuchtung der Beugungsstruktur mit einem Schirm auffangbar ist, bei der die versteckte Bildinformation aus einer Mehrzahl einzelner Bildpunkte zusammengesetzt ist und die Beugungsstruktur Gitterstrukturelemente (74) aufweist, die jeweils einem der Bildpunkte der versteckten Bildinformation zugeordnet sind und die jeweil ein Gittermuster enthalten, das durch zwei Gitterparameter charakterisiert ist, nämlich eine Gitterkonstante und eine Winkelorientierung, dass gerichtete, im Wesentlichen einfarbige Beleuchtung in eine für den zugeordneten Bildpunkt charakteristische Richtung gebeugt wird, wobei

- die offene Bildinformation (76) durch die Form und Lage dieser Gitterstrukturelemente (74) gebildet ist,
- wobei die Gitterstrukturelemente in Form von Streifen ausgebildet sind, wobei die Breite der Streifen unterhalb der Auflösungsgrenze des bloßen Auges liegt, und
- wobei die versteckte Bildinformation im Wesentlichen über die Gesamtfläche der Struktur verteilt ist.

2. Beugungsstruktur nach Anspruch 1, **dadurch gekennzeichnet, dass** die Gitterstrukturelemente in Form von senkrechten oder waagrechten Streifen ausgebildet sind.

3. Beugungsstruktur nach Anspruch 1 oder 2, **dadurch gekennzeichnet, dass** nebeneinander liegende Streifen nebeneinander liegenden Bildpunkten der versteckten Bildinformation zugeordnet sind.

4. Beugungsstruktur nach Anspruch 1 oder 2, **dadurch gekennzeichnet, dass** nebeneinander liegende Streifen solchen Bildpunkten der versteckten Bildinformation zugeordnet sind, die übernächste, drittnächste oder viertnächste Nachbarn sind.

5. Beugungsstruktur nach wenigstens einem der Ansprüche 1 bis 4, **dadurch gekennzeichnet, dass** die Gitterstrukturelemente, die die versteckte Bildinformation erzeugen, in unterschiedlich großen Flächenanteilen vorgesehen sind.

6. Beugungsstruktur nach Anspruch 5, **dadurch gekennzeichnet, dass** die die versteckte Bildinformation erzeugenden Gitterstrukturelemente durch Streifen unterschiedlicher Breite gebildet sind.

7. Beugungsstruktur nach wenigstens einem der Ansprüche 1 bis 6, **dadurch gekennzeichnet, dass** die versteckte Bildinformation eine Umrisszeichnung, eine Strichzeichnung oder einen Schriftzug darstellt.

8. Beugungsstruktur nach wenigstens einem der Ansprüche 1 bis 7, **dadurch gekennzeichnet, dass** die versteckte Bildinformation mehrere Teilbildinformationen enthält, die bei Beleuchtung unterschiedlicher zugeordneter Teilbereiche der Beugungsstruktur erzeugt werden.

9. Beugungsstruktur nach Anspruch 8, **dadurch gekennzeichnet, dass** die Teilbildinformationen eine Bewegungsreihe eines Bildmotivs enthalten, so dass beim aufeinander folgenden Beleuchten der zugehörigen Teilbereiche ein Bewegungsablauf des Motivs erzeugt wird.

10. Beugungsstruktur nach Anspruch 8, **dadurch gekennzeichnet, dass** die Teilbildinformationen eine sich vergrößernde oder verkleinernde Umrisslinie eines Bildmotivs enthalten, so dass beim aufeinander folgenden Beleuchten der zugehörigen Teilbereiche ein Pumpbild des Motivs erzeugt wird.

11. Beugungsstruktur nach Anspruch 8, **dadurch gekennzeichnet, dass** die Teilbildinformationen eine Überlagerung von zumindest zwei Bildmotiven enthalten, so dass beim aufeinander folgenden Beleuchten der zugehörigen Teilbereiche eine Überblendung zwischen den Bildmotiven erzeugt wird.

12. Beugungsstruktur nach Anspruch 8, **dadurch gekennzeichnet, dass** die Teilbildinformationen ein Bildmotiv in unterschiedlichen Helligkeitsstufen enthalten, so dass beim aufeinander folgenden Beleuchten der zugehörigen Teilbereiche eine Einblendung, Ausblendung und/oder ein Blinken des Bildmotivs erzeugt wird.

13. Beugungsstruktur nach Anspruch 8, **dadurch gekennzeichnet, dass** die Teilbildinformationen ein Bildmotiv in verschiedenen Ansichten aus unterschiedlichen Betrachtungsrichtungen enthalten, so dass beim aufeinander folgenden Beleuchten der zugehörigen Teilbereiche eine räumlich variierende Ansicht des Bildmotivs erzeugt wird.

14. Verfahren zum Erzeugen einer optisch variablen Beugungsstruktur (70) nach einem der Ansprüche 1 bis 13, **dadurch gekennzeichnet, dass** die Gitterstrukturelemente mit Elektronenstrahllithographie, Direct Laser Writing, optischer Lithographie, im Holomax-Verfahren oder im Dot-Matrix-Verfahren erzeugt werden.

**15.** Verfahren nach Anspruch 14, **dadurch gekennzeichnet, dass** die Geometrie eines Auffangschirms vorgegeben wird, auf dem die versteckte Bildinformation bei gerichteter, im Wesentlichen einfarbiger Beleuchtung erscheinen soll, und auf Grundlage der Schirmgeometrie unter Verwendung der Beziehung $\vec{n} \times (\vec{k'} - \vec{k}) = m\vec{g}$ eine Gitterkonstante und eine Winkelorientierung für die Gitterstrukturelemente berechnet werden, die die versteckte Bildinformation erzeugen, wobei $\vec{n}$, $\vec{k'}$, und $\vec{k}$ den Normalenvektor auf dem Gitter, den Projektionsvektor und den Beleuchtungsvektor, m die Beugungsordnung und $\vec{g}$ einen Gittervektor darstellen.

**16.** Sicherheitselement mit einer optisch variablen Beugungsstruktur nach wenigstens einem der Ansprüche 1 bis 13.

**17.** Sicherheitselement nach Anspruch 16, **dadurch gekennzeichnet, dass** das Sicherheitselement ein Sicherheitsfaden, ein Etikett oder ein Transferelement ist.

**18.** Sicherheitspapier mit einer optisch variablen Beugungsstruktur nach wenigstens einem der Ansprüche 1 bis 13, oder mit einem Sicherheitselement nach Anspruch 16 oder 17.

**19.** Datenträger mit einer optisch variablen Beugungsstruktur nach wenigstens einem der Ansprüche 1 bis 13, einem Sicherheitselement nach Anspruch 16 oder 17 oder einem Sicherheitspapier nach Anspruch 18.

**20.** Datenträger nach Anspruch 19, **dadurch gekennzeichnet, dass** der Datenträger eine Banknote, ein Wertdokument, ein Pass, eine Ausweiskarte oder eine Urkunde ist.

**21.** Verfahren zur Echtheitsprüfung eines Sicherheitselements nach wenigstens einem der Ansprüche 16 bis 17, eines Sicherheitspapiers nach Anspruch 18 oder eines Datenträgers nach Anspruch 19 oder 20, **dadurch gekennzeichnet, dass** unter vorgegebenen Beleuchtungsbedingungen Lichtstrahlen von Gitterstrukturelementen einer Beugungsstruktur gebeugt werden, wobei die Gitterstrukturelemente eine versteckte Bildinformation auf einem Auffangschirm (164) erzeugen und die Geometrie des Auffangschirms so gestaltet ist, dass die von den Gitterstrukturelementen gebeugten Lichtstrahlen (162, 163) von dem Auffangschirm (164) zu einem Betrachter (167) hin reflektiert werden, und die Echtheit des geprüften Sicherheitselements auf Grundlage der auf dem Auffangschirm erzeugten versteckten Bildinformation beurteilt wird.

**22.** Verfahren nach Anspruch 21, **dadurch gekennzeichnet, dass** der Auffangschirm gekrümmt ist.

**23.** Verfahren nach Anspruch 21 oder 22, **dadurch gekennzeichnet, dass** die Geometrie des Auffangschirms durch ein Ellipsoid oder eine Fläche mit parabolischem oder kreisförmigem Querschnitt gebildet wird.

**24.** Verfahren zur Echtheitsprüfung eines Sicherheitselements nach wenigstens einem der Ansprüche 16 bis 17, eines Sicherheitspapiers nach Anspruch 18 oder eines Datenträgers nach Anspruch 19 oder 20, **dadurch gekennzeichnet, dass** unter vorgegebenen Beleuchtungsbedingungen Lichtstrahlen von Gitterstrukturelementen einer Beugungsstruktur gebeugt werden, wobei die Gitterstrukturelemente eine versteckte Bildinformation auf einem Auffangschirm erzeugen und der Auffangschirm die Rückseite (165) einer Feldlinse (166) bildet, wobei die Feldlinse (166) derart gestaltet ist, dass die von den Gitterstrukturelementen gebeugten Lichtstrahlen (162,163) die Feldlinse so durchstoßen, dass die versteckte Bildinformation auf dem die Rückseite der Feldlinse bildenden Auffangschirm erzeugt wird, und die Echtheit des geprüften Sicherheitselements auf Grundlage der auf dem Auffangschirm erzeugten versteckten Bildinformation beurteilt wird.

**Claims**

**1.** An optically variable diffraction structure (70) that includes an open and a hidden piece of image information, the open piece of image information being visible for a viewer in ambient lighting conditions, while the hidden piece of image information is not perceptible for a viewer under ambient lighting conditions and can be made visible on a screen only upon directed, substantially monochromatic illumination of the diffraction structure, in which the hidden piece of image information is composed of a plurality of individual image points and the diffraction structure exhibits grating structure elements (74) that are each associated with one of the image points of the hidden piece of image information and that each include a grating pattern that is **characterized by** two grating parameters, namely a grating constant and an angle orientation, such that directed, substantially monochromatic illumination is diffracted in a direction that is characteristic for the associated image point, wherein

- the open piece of image information (76) is formed by the shape and position of these grating structure elements (74),
- wherein the grating structure elements are developed in the shape of strips, the width of the strips being below the resolution limit of the naked eye, and
- wherein the hidden piece of image information is distributed substantially across the total area of the structure.

2. The diffraction structure according to claim 1, **characterized in that** the grating structure elements are developed in the shape of vertical or horizontal strips.

3. The diffraction structure according to claim 1 or 2, **characterized in that** adjacent strips are associated with adjacent image points of the hidden piece of image information.

4. The diffraction structure according to claim 1 or 2, **characterized in that** adjacent strips are associated with such image points of the hidden piece of image information that are the second-next, third-next or fourth-next neighbor.

5. The diffraction structure according to at least one of claims 1 to 4, **characterized in that** the grating structure elements that produce the hidden piece of image information are provided in different sized areal fractions.

6. The diffraction structure according to claim 5, **characterized in that** the grating structure elements that produce the hidden piece of image information are formed by strips of differing width.

7. The diffraction structure according to at least one of claims 1 to 6, **characterized in that** the hidden piece of image information constitutes a contour drawing, a line drawing or lettering.

8. The diffraction structure according to at least one of claims 1 to 7, **characterized in that** the hidden piece of image information includes multiple sub-pieces of image information that are produced upon illumination of different associated sub-regions of the diffraction structure.

9. The diffraction structure according to claim 8, **characterized in that** the sub-pieces of image information include a motion series of an image motif such that a motion sequence of the motif is produced upon consecutive illumination of the associated sub-regions.

10. The diffraction structure according to claim 8, **characterized in that** the sub-pieces of image information include a growing or shrinking contour line of an image motif such that a pump image of the motif is produced upon consecutive illumination of the associated sub-regions.

11. The diffraction structure according to claim 8, **characterized in that** the sub-pieces of image information include a superimposition of at least two image motifs such that a dissolve between the image motifs is produced upon consecutive illumination of the associated sub-regions.

12. The diffraction structure according to claim 8, **characterized in that** the sub-pieces of image information include an image motif in different brightness levels such that a fade-in, fade-out and/ or a blinking of the image motif is produced upon consecutive illumination of the associated sub-regions.

13. The diffraction structure according to claim 8, **characterized in that** the sub-pieces of image information include an image motif in different views from different viewing directions such that a spatially varying view of the image motif is produced upon consecutive illumination of the associated sub-regions.

14. A method for producing an optically variable diffraction structure (70) according to one of claims 1 to 13, **characterized in that** the grating structure elements are produced with electron beam lithography, direct laser writing, optical lithography, or in the holomax or dot-matrix method.

15. The method according to claim 14, **characterized in that** the geometry of a detection screen is specified on which the hidden piece of image information is to appear upon directed, substantially monochromatic illumination, and based on the screen geometry, a grating constant and an angle orientation are calculated for the grating structure elements that produce the hidden piece of image information, using the relationship $\vec{n} \times (\vec{k'} - \vec{k}) = m\vec{g}$, wherein $\vec{n}$, $\vec{k'}$, and $\vec{k}$ represent the normal vector on the grating, the projection vector and the illumination vector, m the diffraction order and $\vec{g}$ a grating vector.

**EP 1 676 156 B1**

**16.** A security element having an optically variable diffraction structure according to at least one of claims 1 to 13.

**17.** The security element according to claim 16, **characterized in that** the security element is a security thread, a label or a transfer element.

**18.** A security paper having an optically variable diffraction structure according to at least one of claims 1 to 13, or having a security element according to claim 16 or 17.

**19.** A data carrier having an optically variable diffraction structure according to at least one of claims 1 to 13, a security element according to claim 16 or 17 or a security paper according to claim 18.

**20.** The data carrier according to claim 19, **characterized in that** the data carrier is a banknote, a value document, a passport, an identification card or a certificate.

**21.** A method for checking the authenticity of a security element according to at least one of claims 16 to 17, of a security paper according to claim 18, or of a data carrier according to claim 19 or 20, **characterized in that**, under specified lighting conditions, light beams are diffracted by grating structure elements of a diffraction structure, the grating structure elements producing a hidden piece of image information on a detection screen (164) and the geometry of the detection screen being designed such that the light beams (162, 163) diffracted by the grating structure elements are reflected by the detection screen (164) toward a viewer (167), and the authenticity of the checked security element is assessed based on the hidden piece of image information produced on the detection screen.

**22.** The method according to claim 21, **characterized in that** the detection screen is curved.

**23.** The method according to claim 21 or 22, **characterized in that** the geometry of the detection screen is formed by an ellipsoid or an area having a parabolic or circular cross section.

**24.** The method for checking the authenticity of a security element according to at least one of claims 16 to 17, of a security paper according to claim 18 or of a data carrier according to claim 19 or 20, **characterized in that**, under specified lighting conditions, light beams are diffracted by grating structure elements of a diffraction structure, the grating structure elements producing a hidden piece of image information on a detection screen and the detection screen forming the reverse (165) of a field lens (166), the field lens (166) being designed in such a way that the light beams (162, 163) diffracted by the grating structure elements piercing the field lens in such a way that the hidden piece of image information is produced on the reverse of the detection screen that forms the field lens, and the authenticity of the checked security element is assessed based on the hidden piece of image information produced on the detection screen.

**Revendications**

**1.** Structure diffractante optiquement variable (70) contenant une information d'image accessible à tous et une information d'image cachée, l'information d'image accessible à tous étant visible pour un observateur dans des conditions d'éclairage ambiantes, tandis que l'information d'image cachée ne peut être détectée par un observateur dans des conditions d'éclairage ambiantes et ne peut être captée par un écran que lorsque l'éclairage de la structure diffractante est orienté et sensiblement monochrome, dans laquelle l'information d'image cachée est composée d'une pluralité de pixels individuels et la structure diffractante comprend des éléments de structure de réseau (74) associés respectivement à un des pixels de l'information d'image cachée et contenant respectivement un dessin quadrillé **caractérisé par** deux paramètres de réseau, à savoir une constante de réseau et une orientation angulaire, de sorte que l'éclairage orienté sensiblement monochrome soit diffracté dans une direction caractéristique pour le pixel associé,

> - l'information d'image accessible à tous (76) étant formée par la forme et la position de ces éléments de structure de réseau (74),
> - les éléments de structure de réseau étant conçus sous forme de bande, la largeur des bandes se situant au-dessous de la limite de résolution de l'oeil nu, et
> - l'information d'image cachée étant répartie sensiblement sur toute la surface de la structure.

**2.** Structure diffractante selon la revendication 1, **caractérisée en ce que** les éléments de structure de réseau sont conçus sous forme de bandes verticales ou horizontales.

3. Structure diffractante selon la revendication 1 ou 2, **caractérisée en ce que** des bandes juxtaposées sont associées à des pixels juxtaposés de l'information d'image cachée.

4. Structure diffractante selon la revendication 1 ou 2, **caractérisée en ce que** les bandes juxtaposées sont associées aux pixels de l'information d'image cachée qui sont deuxièmes voisins suivants, troisièmes voisins suivants ou quatrièmes voisins suivants.

5. Structure diffractante selon au moins l'une quelconque des revendications 1 à 4, **caractérisée en ce que** les éléments de structure de réseau produisant l'information d'image cachée sont prévus dans des surfaces de différentes tailles.

6. Structure diffractante selon la revendication 5, **caractérisée en ce que** les éléments de structure de réseau produisant l'information d'image cachée sont formés par des bandes de largeur différente.

7. Structure diffractante selon au moins l'une quelconque des revendications 1 à 6, **caractérisée en ce que** l'information d'image cachée représente un dessin au trait, un dessin linéaire ou une écriture.

8. Structure diffractante selon au moins l'une quelconque des revendications 1 à 7, **caractérisée en ce que** l'information d'image cachée contient plusieurs informations d'image partielle produites lorsque différentes zones partielles associées de la structure diffractante sont éclairées.

9. Structure diffractante selon la revendication 8, **caractérisée en ce que** les informations d'image partielle contiennent une série de mouvements d'un motif d'image, de sorte qu'en cas d'éclairages successifs de zones partielles associées, un déroulement de mouvement du motif est produit.

10. Structure diffractante selon la revendication 8, **caractérisée en ce que** les informations d'image partielle contiennent un contour extérieur grossissant ou réducteur d'un motif d'image, de sorte qu'en cas d'éclairages successifs des zones partielles associées, une image pompée du motif est produite.

11. Structure diffractante selon la revendication 8, **caractérisée en ce que** les informations d'image partielle contiennent une superposition d'au moins deux motifs d'image, de sorte qu'en cas d'éclairages successifs des zones partielles associées, un fondu enchaîné entre les motifs d'image est produite.

12. Structure diffractante selon la revendication 8, **caractérisée en ce que** les informations d'image partielle contiennent un motif d'image en différents niveaux de luminance, de sorte qu'en cas d'éclairages successifs des zones partielles associées, une entrée en fondu, un fondu et/ou un clignotement du motif d'image sont produits.

13. Structure diffractante selon la revendication 8, **caractérisée en ce que** les informations d'image partielle contiennent un motif d'image en différentes vues provenant de différents sens d'observation, de sorte qu'en cas d'éclairages successifs des zones partielles associées, une vue variable dans l'espace du motif d'image soit produite.

14. Procédé de production d'une structure diffractante optiquement variable (70) selon l'une quelconque des revendications 1 à 13, **caractérisé en ce que** les éléments de structure de réseau sont produits par lithographie à faisceaux d'électrons, inscription laser directe, lithographie optique, au cours d'un procédé holomax ou au cours d'un procédé matriciel.

15. Procédé selon la revendication 14, **caractérisé en ce que** la géométrie d'un écran de capture est prédéterminée, sur laquelle l'information d'image cachée apparaîtra lorsque l'éclairage est orienté et sensiblement monochrome, et sur la base de la géométrie de l'écran en utilisant la relation $\vec{n} \times (\vec{k} - \vec{k}) = m\,\vec{g}$ une constante de réseau et une orientation angulaire pour les éléments de structure de réseau sont calculées, lesquelles produisent l'information d'image cachée, $\vec{n}$, $\vec{k}$ et $\vec{k}$ représentant le vecteur normal sur le réseau, le vecteur de projection et le vecteur d'éclairage, m l'ordre de diffraction et $\vec{g}$ un vecteur de réseau.

16. Elément de sécurité comprenant une structure diffractante optiquement variable selon au moins l'une des revendications 1 à 13.

**17.** Elément de sécurité selon la revendication 16, **caractérisé en ce que** l'élément de sécurité est un fil de sécurité, une étiquette ou un élément de transfert.

**18.** Papier de sécurité comprenant une structure diffractante optiquement variable selon au moins l'une des revendications 1 à 13, ou comprenant un élément de sécurité selon la revendication 16 ou 17.

**19.** Support de données comprenant une structure diffractante optiquement variable selon au moins l'une quelconque des revendications 1 à 13, un élément de sécurité selon la revendication 16 ou 17 ou un papier de sécurité selon la revendication 18.

**20.** Support de données selon la revendication 19, **caractérisé en ce que** le support de données est un billet de banque, un document de valeur, un passeport, une carte d'identité ou un acte juridique.

**21.** Procédé de contrôle d'authenticité d'un élément de sécurité selon au moins l'une des revendications 16 à 17, d'un papier de sécurité selon la revendication 18 ou d'un support de données selon la revendication 19 ou 20, **caractérisé en ce que** dans des conditions d'éclairage prédéterminées, des faisceaux lumineux des éléments de structure de réseau d'une structure diffractante sont diffractés, les éléments de structure de réseau produisant une information d'image cachée sur un écran de capture (164) et la géométrie de l'écran de capture étant conçue de sorte que les faisceaux lumineux (162, 163) diffractés par les éléments de structure de réseau soient réfléchis par l'écran de capture (164) en direction d'un observateur (167), et l'authenticité de l'élément de sécurité contrôlé est jugée sur la base de l'information d'image d'information cachée produite sur l'écran de capture.

**22.** Procédé selon la revendication 21, **caractérisé en ce que** l'écran de capture est incurvé.

**23.** Procédé selon la revendication 21 ou 22, **caractérisé en ce que** la géométrie de l'écran de capture est formée par un ellipsoïde ou une surface dotée d'une section transversale parabolique ou circulaire.

**24.** Procédé de contrôle d'authenticité d'un élément de sécurité selon au moins l'une des revendications 16 à 17, d'un papier de sécurité selon la revendication 18 ou d'un support de données selon la revendication 19 ou 20, **caractérisé en ce que** dans des conditions d'éclairage prédéterminées, des faisceaux lumineux d'éléments de structure de réseau d'une structure diffractante sont diffractés, les éléments de structure de réseau produisant une information d'image cachée sur un écran de capture et l'écran de capture formant la face arrière (165) d'une lentille condensatrice (166), la lentille condensatrice (166) étant conçue de telle sorte que les faisceaux lumineux (162, 163) diffractés par les éléments de structure de réseau traversent la lentille condensatrice de sorte que l'information d'image cachée soit produite sur l'écran de capture formant la face arrière de la lentille condensatrice, et l'authenticité de l'élément de sécurité contrôlé est jugée sur la base de l'information d'image cachée produite sur l'écran de capture.

## Fig. 1

10

12

100

14

## Fig. 2

12

18

16

## Fig. 3a

$\vec{k}$

$\vec{n}$

$\vec{g}$

$\vec{k'}$

P

24

22

26

20

a

ω

30  28

32

Fig. 3b

**Fig. 4a**

42

44

44

**Fig. 4b**

46

42

40

**Fig. 5**

42

50

46

48

EP 1 676 156 B1

Fig. 6

46

40

Fig. 7

52
54

40

Fig. 8

56

40

22

**Fig. 9a**

**Fig. 9b**

**Fig. 9c**

Fig. 10

Fig. 11

(x, y, z)

90

(x', y', z')

96

94

92

## Fig. 12a

(x, y, z)

90

92

94

96

(x', y', z')

Fig. 12b

Fig. 13a

Fig. 13b

Fig. 14a

142

144

144

Fig. 14b

146

Fig. 14c

146

142

140

Fig. 15

Fig. 16a

Fig. 16b

Fig. 17a

Fig. 17b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4237415 A1
- DE 10100836 A1
- EP 0467601 B1
- WO 9716772 A

- US 5825547 A
- DE 10226115
- DE 10243413
- DE 10308328

### In der Beschreibung aufgeführte Nicht-Patentliteratur

- **Pawel Stepien et al.** Computer generated optionally variable devices containing hidden information. *SPIE,* Marz 1966, vol. 2659, 218-222